(19) **Europäisches Patentamt / European Patent Office / Office européen des brevets**

(11) **EP 4 387 377 A1**

(12) **EUROPEAN PATENT APPLICATION**
published in accordance with Art. 153(4) EPC

(43) Date of publication:
**19.06.2024 Bulletin 2024/25**

(21) Application number: **22866544.4**

(22) Date of filing: **05.09.2022**

(51) International Patent Classification (IPC):
**H04W 76/11** (2018.01)

(52) Cooperative Patent Classification (CPC):
**H04W 76/11**

(86) International application number:
**PCT/CN2022/117024**

(87) International publication number:
**WO 2023/036081 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.09.2021 CN 202111045946**

(71) Applicant: **Huawei Technologies Co., Ltd.**
**Shenzhen, Guangdong 518129 (CN)**

(72) Inventors:
• **GUO, Yuchen**
  **Shenzhen, Guangdong 518129 (CN)**
• **HUANG, Guogang**
  **Shenzhen, Guangdong 518129 (CN)**
• **LI, Yunbo**
  **Shenzhen, Guangdong 518129 (CN)**
• **GAN, Ming**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND COMMUNICATION APPARATUS**

(57) This application provides a communication method and a communication apparatus. A first field indicating whether a multi-link element includes MAC address information of a first STA is set in a first radio frame, so that address information of a transmitter is indicated more flexibly, to adapt to a plurality of communication scenarios. In the method, the first STA generates the first radio frame. The first radio frame includes the multi-link element, the multi-link element includes the first field, and the first field indicates whether the multi-link element includes the MAC address information of the first STA. The first STA sends the first radio frame. This application is applied to a wireless local area network system that supports an IEEE 802.11ax next-generation Wi-Fi protocol, for example, 802.11be, or an 802.11 series protocol, for example, EHT.

FIG. 5a

EP 4 387 377 A1

**Description**

This application claims priority to Chinese Patent Application No. 202111045946. 6, filed with the China National Intellectual Property Administration on September 7, 2021, and entitled "COMMUNICATION METHOD AND COMMUNICATION APPARATUS", which is incorporated herein by reference in its entirety.

**TECHNICAL FIELD**

This application relates to the field of wireless local area network (wireless local area network, WLAN) technologies, and in particular, to a communication method and a communication apparatus.

**BACKGROUND**

With development of wireless technologies, more wireless devices support multi-link communication. For example, the wireless devices simultaneously communicate on 2. 4 gigahertz (GHz), 5 GHz, and 6 GHz frequency bands, or communicate on different channels at a same frequency band. This improves a communication rate between devices. Such a device is usually referred to as a multi-link device (multi-link device, MLD).

Currently, in WLAN communication, that a transmitter of a radio frame is a station in a multi-link station device is used as an example, and a receiver of the radio frame may be another multi-link device or a single-link device.

In some scenarios, a medium access control header (medium access control header, MAC Header) field included in a radio frame received by the receiver of a radio frame may include address information of the transmitter of a radio frame, to indicate, to the receiver of the radio frame, that the radio frame is from the transmitter.

In some other scenarios, a radio frame sent by the transmitter of the radio frame possibly can be received by the receiver of the radio frame only when the radio frame is forwarded by a forwarding device. The MAC header field included in the radio frame received by the receiver of the radio frame may include address information of the forwarding device, to indicate, to the receiver of the radio frame, that the radio frame is from the forwarding device.

However, in the foregoing plurality of scenarios, for the receiver of the radio frame, whether the address information of the transmitter needs to be obtained and how to obtain the address information of the transmitter are technical problems to be urgently resolved.

**SUMMARY**

This application provides a communication method and a communication apparatus. A first field indicating whether a multi-link element includes MAC address information of a first STA is set in a first radio frame, so that address information of a transmitter is indicated more flexibly, to adapt to a plurality of communication scenarios. Correspondingly, a receiver of the first radio frame flexibly chooses, based on the first field in the first radio frame, whether to receive the MAC address information of the first STA in the multi-link element, and may accurately learn of the MAC address information of the first STA when the first field indicates that the multi-link element includes the MAC address information of the first STA.

A first aspect of this application provides a radio frame sending method, applied to WLAN communication. The method is performed by a first STA, or the method is performed by some components (for example, a processor, a chip, or a chip system) in the first STA. In the first aspect and the possible implementations of the first aspect, an example in which the method is performed by the first STA is used for description. In the method, the first STA generates a first radio frame. The first radio frame includes a multi-link element, the multi-link element includes a first field, and the first field indicates whether the multi-link element includes MAC address information of the first STA. The first STA sends the first radio frame.

It should be noted that, in a design, the MAC address information may be a MAC address, or may be an index (index) of the MAC address, or may be an identifier of the MAC address, or may be another implementation. This is not specifically limited herein.

Based on the technical solution, in a WLAN communication process, the first radio frame sent by a transmitter (for example, a first STA) of a first radio frame carries a multi-link element indicating station information of an MLD in which the first STA is located, and the multi-link element includes the first field indicating whether the multi-link element includes the MAC address information of the first STA. When the first field indicates that the multi-link element includes the MAC address information of the first STA, a receiver (for example, a second STA) of the first radio frame may determine, based on the first field, that the MAC address information of the first STA is located in the multi-link element. Therefore, the first field indicating whether the multi-link element includes the MAC address information of the first STA is set in the first radio frame, so that address information of the transmitter is indicated more flexibly, to adapt to a plurality of communication scenarios. Correspondingly, the receiver of the first radio frame flexibly chooses, based on the first field in the first radio frame, whether to receive the MAC address information of the first STA in the multi-link element, and may accurately learn of the MAC address information of the first STA when the first field indicates that the multi-link element includes the MAC address information of the first STA.

A second aspect of this application provides a radio frame receiving method, applied to WLAN communication. The method is performed by a second STA, or the method is performed by some components (for example, a processor, a chip, or a chip system) in the second STA. In the second aspect and the possible implementations of the second aspect, an example in which the method is performed by the second STA is used for description. In the method, the second STA receives a first radio frame from a first STA. The first radio frame includes a multi-link element, the multi-link element includes a first field, and the first field indicates whether the multi-link element includes MAC address information of the first STA. The second STA determines, based on the first field, whether to receive the MAC address information of the first STA in the multi-link element.

Based on the technical solution, in a WLAN communication process, the first radio frame received by the second STA carries a multi-link element indicating station information of an MLD in which the first STA is located, and the multi-link element includes the first field indicating whether the multi-link element includes the MAC address information of the first STA. When the first field indicates that the multi-link element includes the MAC address information of the first STA, a receiver (for example, the second STA) of the first radio frame may determine, based on the first field, that the MAC address information of the first STA is located in the multi-link element. Therefore, the first field indicating whether the multi-link element includes the MAC address information of the first STA is set in the first radio frame, so that address information of the transmitter is indicated more flexibly, to adapt to a plurality of communication scenarios. Correspondingly, the receiver of the first radio frame flexibly chooses, based on the first field in the first radio frame, whether to receive the MAC address information of the first STA in the multi-link element, and may accurately learn of the MAC address information of the first STA when the first field indicates that the multi-link element includes the MAC address information of the first STA.

A third aspect of this application provides a radio frame sending apparatus, applied to WLAN communication. The apparatus is a first STA, or the apparatus is some components (for example, a processor, a chip, or a chip system) in the first STA. A processing unit in the apparatus is configured to generate a first radio frame. The first radio frame includes a multi-link element, the multi-link element includes a first field, and the first field indicates whether the multi-link element includes MAC address information of the first STA. A transceiver unit in the apparatus is configured to send the first radio frame.

Based on the technical solution, in a WLAN communication process, a first radio frame sent by a sending unit carries a multi-link element indicating station information of an MLD in which the first STA is located, and the multi-link element includes the first field indicating whether the multi-link element includes the MAC address information of the first STA. When the first field indicates that the multi-link element includes the MAC address information of the first STA, a receiver (for example, the second STA) of the first radio frame may determine, based on the first field, that the MAC address information of the first STA is located in the multi-link element. Therefore, the first field indicating whether the multi-link element includes the MAC address information of the first STA is set in the first radio frame, so that address information of the transmitter is indicated more flexibly, to adapt to a plurality of communication scenarios. Correspondingly, the receiver of the first radio frame flexibly chooses, based on the first field in the first radio frame, whether to receive the MAC address information of the first STA in the multi-link element, and may accurately learn of the MAC address information of the first STA when the first field indicates that the multi-link element includes the MAC address information of the first STA.

A fourth aspect of this application provides a radio frame receiving apparatus, applied to WLAN communication. The apparatus is a first STA, or the apparatus is some components (for example, a processor, a chip, or a chip system) in the first STA. A transceiver unit in the apparatus is configured to receive a first radio frame from a first STA. The first radio frame includes a multi-link element, the multi-link element includes a first field, and the first field indicates whether the multi-link element includes MAC address information of the first STA. A processing unit in the apparatus is configured to determine, based on the first field, whether to receive the MAC address information of the first STA in the multi-link element.

Based on the technical solution, in a WLAN communication process, a first radio frame received by a receiving unit carries a multi-link element indicating station information of an MLD in which the first STA is located, and the multi-link element includes the first field indicating whether the multi-link element includes the MAC address information of the first STA. When the first field indicates that the multi-link element includes the MAC address information of the first STA, a receiver (for example, the second STA) of the first radio frame may determine, based on the first field, that the MAC address information of the first STA is located in the multi-link element. Therefore, the first field indicating whether the multi-link element includes the MAC address information of the first STA is set in the first radio frame, so that address information of the transmitter is indicated more flexibly, to adapt to a plurality of communication scenarios. Correspondingly, the receiver of the first radio frame flexibly chooses, based on the first field in the first radio frame, whether to receive the MAC address information of the first STA in the multi-link element, and may accurately learn of the MAC address information of the first STA when the first field indicates that the multi-link element includes the MAC address information of the first STA.

It should be noted that, in the first aspect to the fourth aspect, as the transmitter of the first radio frame, the "first STA" may be a "STA" indicated by a per-STA profile (Per-STA Profile) in the multi-link element. The first radio frame carrying the multi-link element is sent by an MLD. When the MLD is an AP MLD, the per-STA profile indicates profile information of an AP in the AP MLD (in other words, the "first STA" is an AP). When the MLD is a non-AP MLD, the per-STA profile indicates profile information of a STA in the non-AP MLD (in other words, the "first STA" is a STA).

In addition, in the first aspect to the fourth aspect, as the receiver of the first radio frame, the "second STA" that receives the first radio frame carrying the multi-link element may be a single-link device, or may be a "STA" in the MLD. When the second STA is a "STA" in the AP MLD, the second STA is an AP; or when the second STA is a "STA" in the non-AP MLD, the second STA is a STA.

In a possible implementation of any one of the first aspect to the fourth aspect, the first field is located in a presence bitmap (Presence Bitmap) field in the multi-link element.

Based on the technical solution, the first field is located in the presence bitmap field in the multi-link element included in the first radio frame, so that the receiver of the first radio frame can determine the first field based on the presence bitmap field.

In a possible implementation of any one of the first aspect to the fourth aspect, when a value of the first field is a first value, the first field indicates that the multi-link element includes the MAC address information of the first STA, and the multi-link element includes the MAC address information of the first STA.

Optionally, when the value of the first field is a second value, the first field indicates that the multi-link element does not include the MAC address information of the first STA.

Optionally, the first value is different from the second value.

In a possible implementation of any one of the first aspect to the fourth aspect, when the first field indicates that the multi-link element includes the MAC address information of the first STA, the multi-link element includes a common information (Common Info) field, and the MAC address information of the first STA is located in the common information field.

Based on the technical solution, the MAC address information of the first STA is located in the common information field of the multi-link element included in the first radio frame, so that the receiver of the first radio frame can determine the MAC address information of the first STA based on the common information field.

Optionally, when the first field indicates that the multi-link element includes the MAC address information of the first STA, the first radio frame includes any one of the following:

a tunneled direct link setup (tunneled direct link setup, TDLS) discovery request frame, a TDLS discovery response frame, a TDLS setup request frame, a TDLS setup response frame, a TDLS setup confirm frame, a response frame of the TDLS setup confirm frame, a TDLS data frame, and a response frame of the TDLS data frame.

In a possible implementation of any one of the first aspect to the fourth aspect, when the first field indicates that the multi-link element does not include the MAC address information of the first STA, the MAC address information of the first STA is located at another location in the first radio frame other than the multi-link element.

Optionally, the first radio frame further includes a target field, the target field includes the MAC address information of the first STA, and the target field is different from the multi-link element.

Optionally, the target field may be a medium access control header (medium access control header, MAC Header) field.

Optionally, when the first field indicates that the multi-link element does not include the MAC address information of the first STA, the first radio frame includes any one of the following:

an association request frame, a reassociation request frame, an association response frame, a reassociation response frame, or a probe response frame.

A fifth aspect of this application provides a communication method, applied to WLAN communication. The method is performed by a first STA, or the method is performed by some components (for example, a processor, a chip, or a chip system) in the first STA. In the fifth aspect and the possible implementations of the fifth aspect, an example in which the method is performed by the first STA is used for description. In the method, the first STA sends a first radio frame. The first radio frame includes a first multi-link element corresponding to a first multi-link device MLD in which the first STA is located. The first multi-link element includes MAC address information of the first STA. The first STA receives a second radio frame. The second radio frame is a response frame of the first radio frame.

Based on the technical solution, in a WLAN communication process, the first radio frame sent by the first STA carries a multi-link element indicating station information of a first MLD in which the first STA is located, and the first multi-link element includes the MAC address information of the first STA. A receiver (for example, a second STA) of the first radio frame may obtain the MAC address information of the first STA based on the multi-link element. Therefore, the receiver of the first radio frame may receive the MAC address information of the first STA from a location at which the multi-link element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and a TDLS, to improve communication efficiency.

A sixth aspect of this application provides a communication method, applied to WLAN communication. The method is performed by a second STA, or the method is performed by some components (for example, a processor, a chip, or a chip system) in the second STA. In the sixth aspect and the possible implementations of the sixth aspect, an example in which the method is performed by the second STA is used for description. In the method, the second STA receives a first radio frame. The first radio frame includes a first multi-link element corresponding to a first multi-link device MLD in which the first STA is located. The first multi-link element includes MAC address information of the first STA. The second STA sends a second radio frame. The second radio frame is a response frame of the first radio frame.

Based on the technical solution, in a WLAN communication process, the first radio frame received by the second STA carries a multi-link element indicating station information of a first MLD in which the first STA is located, and the first multi-link element includes the MAC address information of the first STA. A receiver (for example, a second STA) of the first radio frame may obtain the MAC address information of the first STA based on the multi-link element. Therefore, the receiver of the first radio frame may receive the MAC address information of the first STA from a location at which the multi-link element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and a TDLS, to improve communication efficiency.

A seventh aspect of this application provides a communication apparatus, applied to WLAN communication. The apparatus is a first STA, or the apparatus is some components (for example, a processor, a chip, or a chip system) in the first STA. A sending unit in the apparatus is configured to send a first radio frame. The first radio frame includes a first multi-link element corresponding to a first multi-link device MLD in which the first STA is located. The first multi-link element includes MAC address information of the first STA. A receiving unit in the apparatus is configured to receive a second radio frame. The second radio frame is a response frame of the first radio frame.

Based on the technical solution, in a WLAN communication process, the first radio frame sent by the sending unit carries a multi-link element indicating station information of a first MLD in which the first STA is located, and the first multi-link element includes the MAC address information of the first STA. A receiver (for example, a second STA) of the first radio frame may obtain the MAC address information of the first STA based on the multi-link element. Therefore, the receiver of the first radio frame may receive the MAC address information of the first STA from a location at which the multi-link element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and a TDLS, to improve communication efficiency.

An eighth aspect of this application provides a communication apparatus, applied to WLAN communication. The apparatus is a first STA, or the apparatus is some components (for example, a processor, a chip, or a chip system) in the first STA. A receiving unit in the apparatus is configured to receive a first radio frame. The first radio frame includes a first multi-link element corresponding to a first multi-link device MLD in which the first STA is located, and the first multi-link element includes MAC address information of the first STA. A sending unit in the apparatus is configured to send a second radio frame. The second radio frame is a response frame of the first radio frame.

Based on the technical solution, in a WLAN communication process, the first radio frame received by the receiving unit carries a multi-link element indicating station information of a first MLD in which the first STA is located, and the first multi-link element includes the MAC address information of the first STA. A receiver (for example, a second STA) of the first radio frame may obtain the MAC address information of the first STA based on the multi-link element. Therefore, the receiver of the first radio frame may receive the MAC address information of the first STA from a location at which the multi-link element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and a TDLS, to improve communication efficiency.

In a possible implementation of any one of the fifth aspect to the eighth aspect, the first multi-link element includes a common information field, and the MAC address information of the first STA is located in the common information field.

Based on the technical solution, the MAC address information of the first STA is located in the common information field of the first multi-link element included in the first radio frame, so that the receiver of the first radio frame can determine the MAC address information of the first STA based on the common information field.

In a possible implementation of any one of the fifth aspect to the eighth aspect, the first multi-link element includes a first field, and the first field indicates whether the first multi-link element includes the MAC address information of the first STA.

Optionally, when a value of the first field is a first value, the first field indicates that the first multi-link element includes the MAC address information of the first STA.

Optionally, when the value of the first field is a second value, the first field indicates that the first multi-link element does not include the MAC address information of the first STA.

Optionally, the first value is different from the second value.

In a possible implementation of any one of the fifth aspect to the eighth aspect, the first field is located in a presence bitmap field in the first multi-link element.

Based on the technical solution, the first field is located in the presence bitmap field in the multi-link element included in the first radio frame, so that the receiver of the first radio frame can determine the first field based on the presence bitmap field.

In a possible implementation of any one of the fifth aspect to the eighth aspect, the first radio frame further includes a first information element, the first information element includes initiator address information and responder address information, and the initiator address information is a MAC address of the first MLD in which the first STA is located.

Optionally, the first information element is a link identification information element (Link Identifier element).

Based on the technical solution, this solution may be applied to a TDLS-based transmission process. The first radio frame sent by the first STA may further include the first information element. The first information element includes at least initiator address information indicating a TDLS initiator (TDLS initiator) and responder address information indicating a TDLS responder (TDLS responder). The initiator address information is the MAC address of the first MLD in which the first STA is located, and indicates that the TDLS initiator is the first MLD in which the first STA is located.

In a possible implementation of any one of the fifth aspect to the eighth aspect, in the first radio frame, the responder address information is MAC address information of the second STA or MAC address information of a second MLD in which the second STA is located.

Based on the technical solution, the solution may be applied to a TDLS-based transmission process. When the TDLS responder is a multi-link device, the responder address information in the first information element may be the MAC address information of the second MLD in which the second STA is located. When the TDLS responder is a single-link device, the responder address information in the first information element may be the MAC address information of the second STA. In this way, the solution can be applied to a plurality of different scenarios.

In a possible implementation of any one of the fifth aspect to the eighth aspect, the second radio frame includes a second multi-link element corresponding to the second MLD in which the second STA is located, and the second multi-link element includes the MAC address of the second STA.

Based on the technical solution, the solution may be applied to a TDLS-based transmission process. When the receiver of the first radio frame is a multi-link device, the second radio frame is used as a response frame of the first radio frame. The second radio frame may also include the second multi-link element corresponding to the second MLD in which the second STA is located. The second multi-link element includes the MAC address of the second STA. In this way, a receiver (for example, the first STA) of the second radio frame may determine the MAC address information of the second STA based on the second multi-link element, and subsequently, the receiver of the second radio frame communicates with the second STA based on the MAC address information of the second STA.

In a possible implementation of any one of the fifth aspect to the eighth aspect, the second multi-link element includes a common information field, and the MAC address information of the second STA is located in the common information field.

Based on the technical solution, the MAC address information of the second STA is located in the common information field of the second multi-link element included in the second radio frame, so that the receiver of the second radio frame can determine the MAC address information of the second STA based on the common information field.

In a possible implementation of any one of the fifth aspect to the eighth aspect, the second multi-link element includes a second field, and the second field indicates whether the second multi-link element includes the MAC address information of the second STA.

Optionally, when a value of the second field is a first value, the second field indicates that the second multi-link element includes the MAC address information of the second STA.

Optionally, when the value of the second field is a second value, the second field indicates that the second multi-link element does not include the MAC address information of the second STA.

Optionally, the first value is different from the second value.

In a possible implementation of any one of the fifth aspect to the eighth aspect, the second field is located in a presence bitmap field in the multi-link element.

Based on the technical solution, the second field is located in the presence bitmap field of the second multi-link element included in the second radio frame, so that the receiver of the second radio frame can determine the second field based on the presence bitmap field.

In a possible implementation of any one of the fifth aspect to the eighth aspect, the second radio frame further includes a second information element, and the second information element includes initiator address information and responder address information.

Optionally, the second information element is a link identification information element (Link Identifier element).

Based on the technical solution, this solution may be applied to a TDLS-based transmission process. The second radio frame sent by the second STA may further include the second information element. The second information element includes at least initiator address information indicating a TDLS initiator (TDLS initiator) and responder address information indicating a TDLS responder (TDLS responder).

In a possible implementation of any one of the fifth aspect to the eighth aspect, in the second information element, the initiator address information is any one of the following:

the MAC address of the first STA; or
the MAC address of the first MLD in which the first STA is located; or
a MAC address of a third STA, where both the third STA and the first STA are located in the first MLD, and a BSSID of a BSS in which the second STA is located is the same as a BSSID of a BSS in which the third STA is located.

Based on the technical solution, the solution may be applied to a TDLS-based transmission process, and the second radio frame sent by the second STA may further include the second information element. The second STA may indicate the initiator address information in the second information element in the foregoing plurality of implementations.

In a possible implementation of any one of the fifth aspect to the eighth aspect, in the second information element, the responder address information is any one of the following:

the MAC address of the second STA; or
the MAC address of the second MLD in which the second STA is located.

Based on the technical solution, the solution may be applied to a TDLS-based transmission process, and the second radio frame sent by the second STA may further include the second information element. The second STA may indicate the responder address information in the second information element in the foregoing plurality of implementations.

A ninth aspect of this application provides a communication method, applied to WLAN communication. The method is performed by a first STA, or the method is performed by some components (for example, a processor, a chip, or a chip system) in the first STA. In the ninth aspect and the possible implementations of the ninth aspect, an example in which the method is performed by the first STA is used for description. In the method, the first STA sends a first radio frame. The first radio frame includes a first information element and a first multi-link element, the first information element is different from the first multi-link element, and the first information element includes MAC address information of the first station STA. A second radio frame is received. The second radio frame is a response frame of the first radio frame.

Based on the technical solution, in a WLAN communication process, the first radio frame sent by the first STA carries a multi-link element indicating station information of a first MLD in which the first STA is located, and the first information element different from the first multi-link element includes the MAC address information of the first STA. A receiver (for example, a second STA) of the first radio frame may obtain the MAC address information of the first STA based on the first information element. Therefore, the receiver of the first radio frame may receive the MAC address information of the first STA from a location at which the first information element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and a TDLS, to improve communication efficiency.

A tenth aspect of this application provides a communication method, applied to WLAN communication. The method is performed by a second STA, or the method is performed by some components (for example, a processor, a chip, or a chip system) in the second STA. In the sixth aspect and the possible implementations of the sixth aspect, an example in which the method is performed by the second STA is used for description. In the method, the second STA receives a first radio frame. The first radio frame includes a first information element and a first multi-link element, and the first information element includes MAC address information of a first station STA. The second STA sends a second radio frame. The second radio frame is a response frame of the first radio frame.

Based on the technical solution, in a WLAN communication process, the first radio frame received by the second STA carries a multi-link element indicating station information of a first MLD in which the first STA is located, and the first information element different from the first multi-link element includes the MAC address information of the first STA. A receiver (for example, a second STA) of the first radio frame may obtain the MAC address information of the first STA based on the first information element. Therefore, the receiver of the first radio frame may receive the MAC address information of the first STA from a location at which the first information element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and a TDLS, to improve communication efficiency.

An eleventh aspect of this application provides a communication apparatus, applied to WLAN communication. The apparatus is a first STA, or the apparatus is some components (for example, a processor, a chip, or a chip system) in the first STA. A sending unit in the apparatus is configured to send a first radio frame. The first radio frame includes a first information element and a first multi-link element, and the first information element includes MAC address information of the first station STA. A receiving unit in the apparatus is configured to receive a second radio frame. The second radio frame is a response frame of the first radio frame.

Based on the technical solution, in a WLAN communication process, the first radio frame sent by the sending unit carries a multi-link element indicating station information of a first MLD in which the first STA is located, and the first information element different from the first multi-link element includes the MAC address information of the first STA. A receiver (for example, a second STA) of the first radio frame may obtain the MAC address information of the first STA based on the first information element. Therefore, the receiver of the first radio frame may receive the MAC address information of the first STA from a location at which the first information element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and a TDLS, to improve communication efficiency.

A twelfth aspect of this application provides a communication apparatus, applied to WLAN communication. The apparatus is a first STA, or the apparatus is some components (for example, a processor, a chip, or a chip system) in the first STA. A receiving unit in the apparatus is configured to receive a first radio frame. The first radio frame includes a first information element and a first multi-link element, and the first information element includes MAC address information of the first station STA. A sending unit in the apparatus is configured to send a second radio frame. The second radio frame is a response frame of the first radio frame.

Based on the technical solution, in a WLAN communication process, the first radio frame received by the receiving unit carries a multi-link element indicating station information of a first MLD in which the first STA is located, and the first information element different from the first multi-link element includes the MAC address information of the first STA. A receiver (for example, a second STA) of the first radio frame may obtain the MAC address information of the first STA based on the first information element. Therefore, the receiver of the first radio frame may receive the MAC address information of the first STA from a location at which the first information element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and a TDLS, to improve communication efficiency.

In a possible implementation of any one of the ninth aspect to the twelfth aspect, the first information element is a link identification information element, the link identification information element includes initiator address information and responder address information, the initiator address information is the MAC address information of the first STA (or expressed as that the MAC address information of the first STA is located in the link identification information element), and the responder address information is address information of the second STA or address information of an MLD in which the second STA is located.

Based on the technical solution, the solution may be applied to a TDLS-based transmission process. The first information element included in the first radio frame sent by the first STA is the link identification information element, and the link identification information element includes at least initiator address information indicating a TDLS initiator (TDLS initiator) and responder address information indicating a TDLS responder (TDLS responder). The initiator address information is a MAC address of the first STA, and indicates that the TDLS initiator is the first STA.

In a possible implementation of any one of the ninth aspect to the twelfth aspect, the first radio frame further includes a link identification information element, the link identification information element includes initiator address information and responder address information, the initiator address information is MAC address information of the first MLD in which the first STA is located, and the responder address information is address information of a second STA or address information of an MLD in which the second STA is located.

Optionally, the first information element is different from the multi-link element, and the first information element is different from the link identification information element.

Based on the technical solution, the solution may be applied to a TDLS-based transmission process. In addition to the first information element and the multi-link element, the first radio frame sent by the first STA further includes the link identification information element. The link identification information element includes at least initiator address information indicating a TDLS initiator (TDLS initiator) and responder address information indicating a TDLS responder (TDLS responder). The initiator address information is the MAC address of the first MLD in which the first STA is located, and indicates that the TDLS initiator is the first MLD in which the first STA is located.

In a possible implementation of any one of the ninth aspect to the twelfth aspect, the second radio frame includes a second information element and a second multi-link element, and the second information element includes MAC address information of the second station STA.

Based on the technical solution, the solution may be applied to a TDLS-based transmission process. When a receiver of the first radio frame is a multi-link device, the second radio frame is used as a response frame of the first radio frame. The second radio frame may also include a second multi-link element corresponding to a second MLD in which the second STA is located and the second information element, and the second information element includes a MAC address of the second STA. In this way, a receiver (for example, the first STA) of the second radio frame may determine the MAC address information of the second STA based on the second information element, and subsequently, the receiver of the second radio frame communicates with the second STA based on the MAC address information of the second STA.

In a possible implementation of any one of the ninth aspect to the twelfth aspect, the second information element is a link identification information element, the link identification information element includes initiator address information and responder address information, the initiator address information is the MAC address information of the second STA (or expressed as that the MAC address information of the second STA is located in the link identification information element), and the responder address information is address information of the second STA or address information of an MLD in which the second STA is located.

Based on the technical solution, the solution may be applied to a TDLS-based transmission process. The second information element included in the second radio frame sent by the second STA is a link identification information element, and the link identification information element includes at least initiator address information indicating a TDLS initiator (TDLS initiator) and responder address information indicating a TDLS responder (TDLS responder). The responder address information is a MAC address of the second STA, and indicates that the TDLS responder is the second STA.

In a possible implementation of any one of the ninth aspect to the twelfth aspect, the first radio frame further includes a link identification information element, the link identification information element includes initiator address information and responder address information, the initiator address information is MAC address information of the first MLD in which the first STA is located, and the responder address information is address information of a second STA or address information of an MLD in which the second STA is located.

Optionally, the second information element is different from the multi-link element, and the first information element is different from the link identification information element.

Based on the technical solution, the solution may be applied to a TDLS-based transmission process. In addition to the second information element and the multi-link element, the second radio frame sent by the second STA further includes the link identification information element. The link identification information element includes at least initiator address information indicating a TDLS initiator (TDLS initiator) and responder address information indicating a TDLS responder (TDLS responder). The initiator address information is the MAC address information of the first MLD in which the first STA is located, and indicates that the TDLS initiator is the first MLD in which the first STA is located.

In a possible implementation of any one of the first aspect to the twelfth aspect, the first radio frame includes a TDLS discovery request frame, a TDLS setup request frame, or a TDLS setup confirm frame; and that the first STA sends the first radio frame includes: The first STA sends the first radio frame to a first access point AP associated with the first STA. The first radio frame further includes an address 1 (Address 1, A1) field, an address 2 (Address 2, A2) field, and an address 3 (Address 3, A3) field. A value of the A1 field is address information of the first AP, a value of the A2 field is the address information of the first STA, and a value of the A3 field is the responder address information.

Based on the technical solution, the solution may be applied to a plurality of TDLS-based transmission processes, for example, a TDLS discovery process and a TDLS setup process. The first radio frame specifically includes (or carries) a TDLS discovery request frame, a TDLS setup request frame, or a TDLS setup confirm frame. The first STA may send the first radio frame to the first AP associated with the first STA. The first radio frame further includes an A1 field indicating a receiver address (receiver address, RA) of the first radio frame, an A2 field indicating a transmitter address (transmitter address, TA) of the first radio frame, and an A3 field indicating a destination address (destination address, DA) of the first radio frame.

In a possible implementation of any one of the first aspect to the twelfth aspect, the first radio frame is a TDLS data frame; and that the first STA sends the first radio frame includes: The first STA sends the first radio frame to the second STA. The first radio frame further includes an A1 field, an A2 field, and an A3 field. A value of the A1 field is the responder address information, a value of the A2 field is the address information of the first STA, and a value of the A3 field is a BSSID or a MAC address of an AP MLD.

Based on the technical solution, the solution may be applied to a plurality of TDLS-based transmission processes, for example, a TDLS data transmission process. In other words, the first radio frame is a TDLS data frame. The first STA may specifically send the first radio frame to the second STA. The first radio frame further includes an A1 field indicating a RA of the first radio frame, an A2 field indicating a TA of the first radio frame, and an A3 field indicating a DA of the first radio frame.

In a possible implementation of any one of the first aspect to the twelfth aspect, the second radio frame is a TDLS setup response frame; and that the first STA receives a second radio frame includes: The first STA receives the second radio frame from the first AP associated with the first STA. The second radio frame includes an A1 field, an A2 field, and an A3 field. A value of the A1 field is the address information of the first STA, a value of the A2 field is address information of the first AP, and a value of the A3 field is the responder address information.

Based on the technical solution, the solution may be applied to a plurality of TDLS-based transmission processes, for example, a TDLS setup process. The second radio frame is specifically a TDLS setup response frame. The first STA may receive the second radio frame sent by the first AP associated with the first STA. The second radio frame further includes an A1 field indicating a RA of the second radio frame, an A2 field indicating a TA of the second radio frame, and an A3 field indicating a DA of the second radio frame.

In a possible implementation of any one of the first aspect to the twelfth aspect, the second radio frame includes a TDLS discovery response frame, a response frame of the TDLS setup confirm frame, or a response frame of the TDLS data frame; and that the first STA receives a second radio frame includes: The first STA receives the second radio frame from the second STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

Based on the technical solution, the solution may be applied to a plurality of TDLS-based transmission processes, for example, a TDLS discovery process, a TDLS setup process, and a TDLS data transmission process. The second radio frame specifically includes (or carries) the TDLS discovery response frame, the response frame of the TDLS setup confirm frame, or the response frame of the TDLS data frame. The first STA may receive the second radio frame sent by the second STA. The second radio frame further includes an A1 field indicating a RA of the second radio frame, an A2 field indicating a TA of the second radio frame, and an A3 field indicating a DA of the second radio frame.

In a possible implementation of any one of the first aspect to the twelfth aspect, the first radio frame includes a TDLS discovery request frame, a TDLS setup request frame, or a TDLS setup confirm frame; and that the second STA receives the first radio frame includes: The second STA receives the first radio frame from a second AP associated with the second STA. The first radio frame further includes an A1 field, an A2 field, and an A3 field. A value of the A1 field is the address information of the second STA, a value of the A2 field is address information of the second AP, and a value of the A3 field is the initiator address information.

Based on the technical solution, the solution may be applied to a plurality of TDLS-based transmission processes, for example, a TDLS discovery process and a TDLS setup process. The first radio frame specifically includes (or carries) a TDLS discovery request frame, a TDLS setup request frame, or a TDLS setup confirm frame. The second STA may receive the first radio frame sent by the second AP associated with the second STA. The first radio frame further includes an A1 field indicating a RA of the first radio frame, an A2 field indicating a TA of the first radio frame, and an A3 field indicating a DA of the first radio frame.

In a possible implementation of any one of the first aspect to the twelfth aspect, the first radio frame is a TDLS data frame; and that the second STA receives the first radio frame includes: The second STA receives the first radio frame from the first STA. The first radio frame further includes an A1 field, an A2 field, and an A3 field. A value of the A1 field is the address information of the second STA, a value of the A2 field is the initiator address information, and a value of the A3 field is a BSSID or MAC address information of an AP MLD.

Based on the technical solution, the solution may be applied to a plurality of TDLS-based transmission processes, for example, a TDLS data transmission process. In other words, the first radio frame is a TDLS data frame. The second STA may specifically receive the first radio frame sent by the first STA. The first radio frame further includes an A1 field indicating a RA of the first radio frame, an A2 field indicating a TA of the first radio frame, and an A3 field indicating a DA of the first radio frame.

In a possible implementation of any one of the first aspect to the twelfth aspect, the second radio frame is a TDLS setup response frame, and that the second STA sends a second radio frame includes: The first STA sends the second radio frame to a second AP associated with the second STA. The second radio frame includes an A1 field, an A2 field, and an A3 field. A value of the A1 field is address information of the second AP, a value of the A2 field is the address information of the second STA, and a value of the A3 field is the initiator address information.

Based on the technical solution, the solution may be applied to a plurality of TDLS-based transmission processes, for example, a TDLS setup process. The second radio frame is specifically a TDLS setup response frame. The second STA may specifically send the second radio frame to the second AP associated with the second STA. The second radio frame further includes an A1 field indicating a RA of the second radio frame, an A2 field indicating a TA of the second radio frame, and an A3 field indicating a DA of the second radio frame.

In a possible implementation of any one of the first aspect to the twelfth aspect, the second radio frame includes a TDLS discovery response frame, a response frame of the TDLS setup confirm frame, or a response frame of the TDLS data frame; and that the second STA sends a second radio frame includes: The second STA sends the second radio frame to the first STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

Based on the technical solution, the solution may be applied to a plurality of TDLS-based transmission processes, for example, a TDLS discovery process, a TDLS setup process, and a TDLS data transmission process. The second radio frame specifically includes (or carries) the TDLS discovery response frame, the response frame of the TDLS setup confirm frame, or the response frame of the TDLS data frame. The second STA may specifically send the second radio frame to the second STA associated with the second STA. The second radio frame further includes an A1 field indicating a RA of the second radio frame, an A2 field indicating a TA of the second radio frame, and an A3 field indicating a DA of the second radio frame.

In a possible implementation of any one of the first aspect to the twelfth aspect, the responder is the second STA or the second MLD in which the second STA is located.

Based on the technical solution, in a plurality of transmission processes applied to the TDLS, a responder indicated by the responder address information included in the first radio frame (or the second radio frame) may be the second STA or the second MLD in which the second STA is located. In other words, a responder in a TDLS communication link may be the second STA or the second MLD in which the second STA is located.

In a possible implementation of any one of the first aspect to the twelfth aspect, the initiator is the first STA or the first MLD in which the first STA is located.

Based on the technical solution, in a plurality of transmission processes applied to the TDLS, an initiator indicated by the initiator address information included in the first radio frame (or the second radio frame) may be the first STA or the first MLD in which the first STA is located. In other words, a responder in a TDLS communication link may be the first STA or the first MLD in which the first STA is located.

A thirteenth aspect of embodiments of this application provides a communication apparatus, including at least one processor. The at least one processor is coupled to a memory, and the memory is configured to store a program or instructions. The at least one processor is configured to execute the program or instructions, so that the apparatus implements the method described in any one of the first aspect or the possible implementations of the first aspect, or the apparatus implements the method described in any one of the second aspect or the possible implementations of the second aspect, or the apparatus implements the method described in any one of the fifth aspect or the possible implementations of the fifth aspect, or the apparatus implements the method described in any one of the sixth aspect or the possible implementations of the sixth aspect, or the apparatus implements the method described in any one of the ninth aspect or the possible implementations of the ninth aspect, or the apparatus implements the method described in any one of the tenth aspect or the possible implementations of the tenth aspect.

A fourteenth aspect of embodiments of this application provides a computer-readable storage medium storing one or more computer-executable instructions. When the computer-executable instructions are executed by a processor, the processor performs the method described in any one of the first aspect or the possible implementations of the first aspect, or the processor performs the method described in any one of the second aspect or the possible implementations of the second aspect, or the processor performs the method described in any one of the fifth aspect or the possible implementations of the fifth aspect, or the processor performs the method described in any one of the sixth aspect or the possible implementations of the sixth aspect, or the processor performs the method described in any one of the ninth aspect or the possible implementations of the ninth aspect, or the processor performs the method described in any one of the tenth aspect or the possible implementations of the tenth aspect.

A fifteenth aspect of embodiments of this application provides a computer program product (or referred to as a computer program) storing one or more computers. When the computer program product is executed by a processor, the processor performs the method described in any one of the first aspect or the possible implementations of the first aspect, or the processor performs the method described in any one of the second aspect or the possible implementations of the second aspect, or the processor performs the method described in any one of the fifth aspect or the possible implementations of the fifth aspect, or the processor performs the method described in any one of the sixth aspect or the possible implementations of the sixth aspect, or the processor performs the method described in any one of the ninth aspect or the possible implementations of the ninth aspect, or the processor performs the method described in any one of the tenth aspect or the possible implementations of the tenth aspect.

A sixteenth aspect of embodiments of this application provides a chip system. The chip system includes at least one processor, configured to support a communication apparatus to implement the function in any one of the first aspect or the possible implementations of the first aspect; or configured to support the communication apparatus to implement the function in any one of the second aspect or the possible implementations of the second aspect; or configured to support the communication apparatus to implement the function in any one of the fifth aspect or the possible implementations of the fifth aspect; or configured to support the communication apparatus to implement the function in any one of the sixth aspect or the possible implementations of the sixth aspect; or configured to support the communication apparatus to implement the function in any one of the ninth aspect or the possible implementations of the ninth aspect; or configured to support the communication apparatus to implement the function in any one of the tenth aspect or the possible implementations of the tenth aspect.

In a possible design, the chip system may further include a memory, configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

An eleventh aspect of embodiments of this application provides a communication system. The communication system includes the communication apparatus in the third aspect and the communication apparatus in the fourth aspect; and/or the communication system includes the communication apparatus in the seventh aspect and the communication apparatus in the eighth aspect; and/or the communication system includes the communication apparatus in the eleventh aspect and the communication apparatus in the twelfth aspect.

For technical effects brought by any design manner of the thirteenth aspect to the sixteenth aspect, refer to technical effects brought by different implementations of the first aspect or the twelfth aspect. Details are not described herein again.

It can be learned from the technical solutions that, for the transmitter of the first radio frame, whether the multi-link element includes the MAC address information of the first STA may be flexibly set in the multi-link element based on the first field, and different indications of the first field are applicable to different communication scenarios. Correspondingly, the receiver of the first radio frame flexibly chooses, based on the first field, whether to receive the MAC address information of the first STA in the multi-link element, and may accurately learn of the MAC address information of the first STA when the first field indicates that the multi-link element includes the MAC address information of the first STA.

In addition, in some implementations, the receiver of the first radio frame may determine the MAC address information of the first STA based on a first field (or a multi-link element, or a link identification information element, or another information element different from the multi-link element and different from the link identification information element) of the multi-link element, so that the receiver of the first radio frame can effectively learn of the MAC address information of the first STA. In addition, after the receiver of the first radio frame learns of the MAC address information of the first STA, subsequently, the receiver of the first radio frame may further communicate with the first STA based on the MAC address information of the first STA and the TDLS, to improve communication efficiency.

## BRIEF DESCRIPTION OF DRAWINGS

FIG. 1 is a schematic diagram of a communication system to which this application is applied;
FIG. 2a is a schematic diagram of a radio frame according to an embodiment of this application;
FIG. 2b is another schematic diagram of a radio frame according to an embodiment of this application;
FIG. 3a is another schematic diagram of a radio frame according to an embodiment of this application;
FIG. 3b is another schematic diagram of a radio frame according to an embodiment of this application;
FIG. 4 is another schematic diagram of a radio frame according to an embodiment of this application;
FIG. 5a is a schematic diagram of a communication method according to an embodiment of this application;
FIG. 5b is another schematic diagram of a radio frame according to an embodiment of this application;
FIG. 6a is another schematic diagram of a communication method according to an embodiment of this application;
FIG. 6b is another schematic diagram of a communication method according to an embodiment of this application;
FIG. 7a is another schematic diagram of a communication system to which this application is applied;
FIG. 7b is another schematic diagram of a communication system to which this application is applied;
FIG. 7c is another schematic diagram of a communication system to which this application is applied;
FIG. 7d is another schematic diagram of a communication system to which this application is applied;
FIG. 8a is another schematic diagram of a radio frame according to an embodiment of this application;
FIG. 8b is another schematic diagram of a radio frame according to an embodiment of this application;
FIG. 8c is another schematic diagram of a radio frame according to an embodiment of this application;
FIG. 9 is a schematic diagram of a communication apparatus according to an embodiment of this application;
FIG. 10 is another schematic diagram of a communication apparatus according to an embodiment of this application; and
FIG. 11 is another schematic diagram of a communication apparatus according to an embodiment of this application.

**DESCRIPTION OF EMBODIMENTS**

In this application, unless otherwise specified, for same or similar parts in embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following descriptions are implementations of this application, but are not intended to limit the protection scope of this application.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with other features based on requirements. Correspondingly, an apparatus provided in embodiments of this application may also correspondingly implement these features or functions. Details are not described herein.

In the descriptions of this application, "a plurality of" means two or more than two unless otherwise specified. "At least one of the following items (pieces)" or an expression similar thereto means any combination of these items, including any combination of singular items (pieces) or plural items (pieces). For example, at least one of a, b, or c may represent a, b, c, a and b, a and c, b and c, or a, b, and c, where a, b, and c may be singular or plural.

In addition, to clearly describe technical solutions in embodiments of this application, words such as "first" and "second" are used in embodiments of this application to distinguish between same items or similar items that have basically the same functions or purposes. A person skilled in the art may understand that the words such as "first" and "second" do not limit a quantity and an execution sequence, and that the words such as "first" and "second" do not indicate a definite difference. In addition, in embodiments of this application, the word such as "example" or "for example" represents giving an example, an illustration, or a description. Any embodiment or design scheme described as "example" or "for example" in embodiments of this application should not be explained as being more preferred or having more advantages than another embodiment or design scheme. Exactly, use of the terms such as "example" or "for example" are intended to present a related concept in a specific manner for ease of understanding.

For ease of understanding a method provided in embodiments of this application, the following describes a system architecture of the method provided in embodiments of this application. It may be understood that the system architecture described in embodiments of this application is intended to describe the technical solutions in embodiments of this application more clearly, and constitutes no limitation on the technical solutions provided in embodiments of this application.

The technical solutions provided in this application are applicable to a WLAN scenario, for example, are applicable to standards of an IEEE 802.11 system, for example, an 802.11a/b/g standard, an 802.11n standard, an 802.11ac standard, an 802.11ax standard, or a next generation of 802.11ax, for example, 802.11be, or a further next generation standard.

Although embodiments of this application are mainly described by using an example in which a WLAN network, especially a network to which the standards of an IEEE 802.11 system are applied is deployed, a person skilled in the art easily understands that aspects of this application may be extended to other networks using various standards or protocols, for example, Bluetooth (Bluetooth), a high-performance wireless LAN (high performance radio LAN, HIPERLAN) (which is a wireless standard similar to the IEEE 802.11 standard, and mainly used in Europe), a wide area network (WAN), a personal area network (personal area network, PAN), or other networks that are known currently or developed in future. Therefore, regardless of a used coverage area and wireless access protocol, various aspects provided in this application are applicable to any proper wireless network.

The communication system to which this application is applicable is merely an example for description, and the communication system to which this application is applicable is not limited thereto. This is collectively described herein. Details are not described below again.

A communication method and apparatus provided in embodiments of this application may be applied to a wireless communication system. The wireless communication system may be a wireless local area network (wireless local area network, WLAN). The method may be implemented by a communication device in the wireless communication system or a chip or a processor in the communication device. The communication device may be a wireless communication device that supports parallel transmission on a plurality of links, for example, referred to as a multi-link device (multi-link device, MLD) or a multi-band device (multi-band device). Compared with a device that supports only single-link transmission, the multi-link device has higher transmission efficiency and a higher throughput.

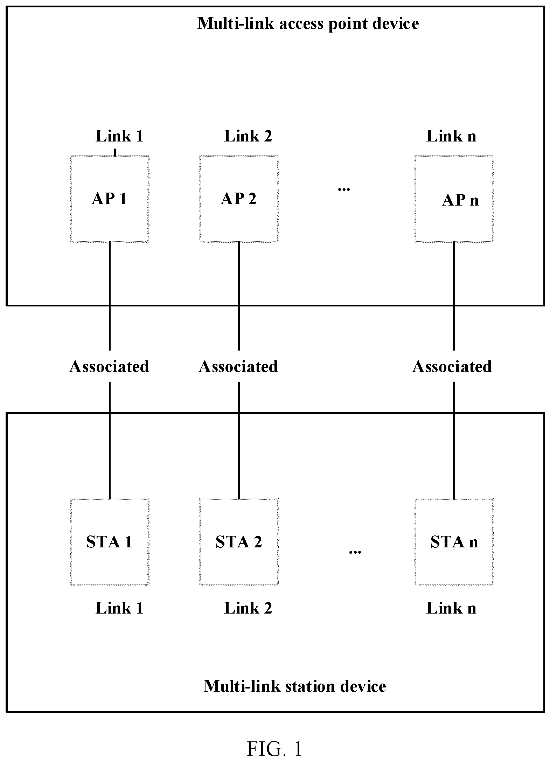

FIG. 1 is a schematic diagram of a communication system according to an embodiment of this application. It should be noted that, in the communication system shown in FIG. 1, an example in which a communication apparatus (a transmission apparatus applied to a tunneled direct link setup) in this application is a multi-link device is used for description. In some embodiments, the communication apparatus (a radio frame sending apparatus or a radio frame receiving apparatus) in this application may alternatively be a single-link device. FIG. 1 shows merely an example, and should not be construed as a limitation on this application.

As shown in FIG. 1, the communication system mainly includes at least one multi-link access point device (Multi-link AP device) and at least one multi-link non-access point station device (Multi-link non-AP STA device) (briefly referred to as a multi-link station device). The multi-link access point device and the multi-link station device may be collectively referred to as a multi-link device. The following describes the multi-link device.

Usually, the multi-link device includes one or more affiliated stations (affiliated station, denoted as affiliated STA). The affiliated STA is a logical station and may operate on a single link. The affiliated station may be an access point (access point, AP) or a non-access point station (non-access point station, non-AP STA). For ease of description, in this application, a multi-link device whose affiliated station is an AP may be referred to as a multi-link AP, a multi-link AP device (multi-link AP device), or an AP multi-link device (AP multi-link device, AP MLD); and a multi-link device (multi-link non-AP STA device, non-AP MLD) whose affiliated station is a non-AP STA may be referred to as a multi-link STA, a multi-link STA device, or a STA multi-link device (STA multi-link device). For ease of description, that "the multi-link device includes an affiliated STA" is also briefly described as that "the multi-link device includes a STA" in this embodiment of this application.

It should be noted that the multi-link device includes a plurality of logical stations, and each logical station operates on one link, but the plurality of logical stations are allowed to operate on a same link. A link identifier mentioned below represents one station operating on one link. In other words, if there is more than one station on one link, more than one link identifier needs to represent the more than one station. A link mentioned below sometimes also represents a station operating on the link.

It should be noted that, in a scenario shown in FIG. 1, there may be a plurality of implementations of a processor (or referred to as a processing module, a processing unit, or the like, where the processor is used as an example for description herein) included in the multi-link device, to implement information processing and interaction. A multi-link station device including a plurality of STAs is used as an example for description below.

In a possible implementation, each STA in the multi-link station device has an independent processor.

Optionally, the plurality of STAs in the multi-link station device may communicate with each other by using independent processors of the plurality of STAs, to implement information exchange.

In another possible implementation, in addition to an independent processor, each STA in the multi-link station device further has one (or more) common (or shared) processor.

Optionally, the plurality of STAs in the multi-link station device may communicate with each other by using independent processors of the plurality of STAs, to implement information exchange; and/or the plurality of STAs in the multi-link station device may communicate with the common (or shared) processor by using the independent processors of the plurality of STAs, to implement information exchange.

In another possible implementation, the multi-link station device has one (or more) common (or shared) processor.

Optionally, the plurality of STAs in the multi-link station device may communicate with the common (or shared) processor, to implement information exchange.

During data transmission between the multi-link AP device and the multi-link STA, a link identifier may identify one link or a station on the link. Before communication, the multi-link AP device and the multi-link STA device may negotiate or communicate with each other about a correspondence between a link identifier and a link or a station on the link. Therefore, during data transmission, a link or a station on the link can be indicated without requiring a large amount of signaling information, provided that a link identifier is carried. This reduces signaling overheads and improves transmission efficiency.

In an example, a management frame, for example, a beacon (beacon) frame, sent by the multi-link AP device when a BSS is established carries an element including a plurality of link identification information fields, and a correspondence between a link identifier and a station operating on a link may be established in each link identification information field. Each link identification information field includes a link identifier, and further includes one or more of a medium access control (medium access control, MAC) address, an operation set, and a channel number. The one or more of the MAC address, the operation set, and the channel number may indicate a link. In another example, in a multi-link association establishment process, the multi-link AP device and the multi-link station device negotiate about a plurality of link identification information fields. In subsequent communication, the multi-link AP device or the multi-link station device may represent a station in the multi-link device by using the link identifier, and the link identifier may further represent one or more attributes in a MAC address of the station, an operation set, and a channel number. The MAC address may alternatively be replaced with an association identifier of the associated multi-link AP device.

If a plurality of stations operate on one link, the link identifier (a numeric ID) represents an operation set and a channel number corresponding to the link, and further represents an identifier of a station operating on the link, for example, a MAC address or an association identifier (association identifier, AID) of the station.

The multi-link device may implement wireless communication according to 802.11 series of standards. For example, a station complying with an extremely high throughput (extremely high throughput, EHT), or a station complying with 802.11be or compatible with a station supporting 802.11be implements communication with another device. Certainly, the another device may be a multi-link device, or may not be a multi-link device.

The non-AP MLD in this application may be a wireless communication chip, a wireless sensor, or a wireless communication terminal, for example, a user terminal, a user apparatus, an access apparatus, a subscriber station, a subscriber unit, a mobile station, a user agent, and user equipment that support Wi-Fi communication. The user terminal may be various handheld devices, vehicle-mounted devices, wearable devices, internet of things (internet of things, IoT) devices, or computing devices that have a wireless communication function, or another processing device connected to a wireless modem, user equipment (user equipment, UE) of various forms, a mobile station (mobile station, MS), a terminal (terminal), a terminal device (terminal device), a portable communication device, a handheld device, a portable computing device, an entertainment device, a game device or system, a global positioning system device, any other proper device configured to perform network communication via a wireless medium, and the like. In addition, the non-AP MLD may support the 802.11be standard or a next-generation WLAN standard of the 802.11be standard. The non-AP MLD may also support a plurality of WLAN standards such as 802.11ax, 802.11ac, 802.11n, 802.11g, 802.11b, and 802.11a.

The AP MLD in this embodiment of this application may be an apparatus that is deployed in a wireless communication network to provide a wireless communication function for a non-AP associated with the AP MLD. The AP MLD is mainly deployed at home, inside a building, and in a campus, with a typical coverage radius of tens of meters to hundreds of meters. Certainly, the AP MLD may alternatively be deployed outdoors. The AP MLD is equivalent to a bridge that connects a wired network and a wireless network. A main function of the AP MLD is to connect various wireless network clients together and then connect the wireless network and the Ethernet. Specifically, the AP MLD may be a communication device with a Wi-Fi chip, for example, a base station, a router, a gateway, a repeater, a communication server, a switch, or a bridge. The base station may include a macro base station, a micro base station, a relay station, and the like in various forms. In addition, the AP MLD may support the 802.11be standard or the next-generation WLAN standard of the 802.11be standard. The AP MLD may also support WLAN standards such as 802.11ax, 802.11ac, 802.11n, 802.11g, 802.11b, and 802.11a.

The foregoing content briefly describes the system architecture in embodiments of this application. To better understand the technical solutions in embodiments of this application, the following describes content related to embodiments of this application.

I. Tunneled direct link setup (tunneled direct link setup, TDLS)

In a WLAN communication network, there may be a plurality of stations (station, STA) associated with a same access point (access point, AP), and the plurality of STAs may be denoted as STAs. If the STA is in a wireless communication reachable range, the STA may set up a direct link based on the TDLS, to perform point-to-point communication, increase a transmission rate, and reduce a latency. Two stations may set up a direct link in a TDLS discovery process and a TDLS setup process, to perform point-to-point communication. When the direct link is no longer needed, the STA may disconnect the direct link by using a TDLS teardown (teardown) process.

1. TDLS discovery (discovery) process: In the TDLS discovery process, a TDLS initiator (TDLS initiator, briefly referred to as an initiator) needs to obtain information about a TDLS responder (TDLS responder, briefly referred to as a responder) in the TDLS discovery process. The following steps are specifically included:

Step 1: The initiator sends a tunneled direct link setup discovery request (TDLS discovery request) frame, where the TDLS discovery request frame carries related information of the initiator and a link identification information element (Link Identifier element), and the link identifier element carries related information of the direct link, including an initiator address, a responder address, and a BSSID. The BSSID is an identifier of a BSS in which the initiator and the responder are located. In other words, the initiator and the responder need to be in a same BSS.

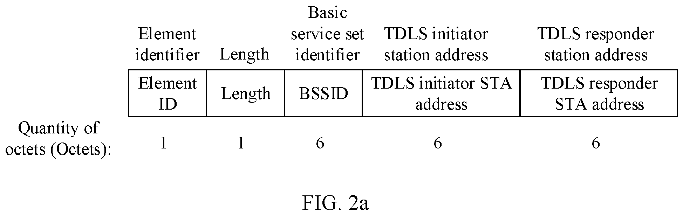

Optionally, an implementation example of a frame format of the link identifier element is shown in FIG. 2a. In FIG. 2a, the link identifier element includes:

an element identifier (Element ID) field, which occupies 1 octet; a length (Length) field, which occupies 1 octet; a basic service set identifier (BSSID) field, which occupies 6 octets; a TDLS initiator station address (TDLS initiator STA Address) field, which occupies 6 octets; and a TDLS responder station address (TDLS responder STAAddress) field, which occupies 6 octets.

Optionally, the initiator may send the TDLS discovery request frame to the responder by using the AP. For example, a process in which the initiator sends the TDLS discovery request frame includes: The initiator sends a first frame to the AP, where the first frame includes the TDLS discovery request frame; and further includes: The AP sends a second frame to the responder, where the second frame includes the TDLS discovery request frame.

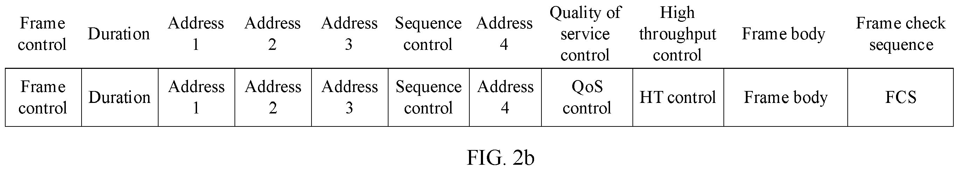

For example, a frame structure of a data frame that carries the TDLS discovery request frame and that is sent by the initiator to the AP is shown in FIG. 2b. The following information is included: Frame control (Frame Control), Duration (Duration), Address 1 (Address 1), Address 2 (Address 2), Address 3 (Address 3), Sequence control (Sequence Control), Address 4 (Address 4), Quality of service control (quality of service control, QoS Control), High throughput control (high throughput control, HT Control), Frame body (Frame Body), and Frame check sequence (frame check sequence, FCS).

Optionally, in the example shown in FIG. 2b, other information (for example, at least one of "Frame control (Frame Control), Duration (Duration), Address 1 (Address 1), Address 2 (Address 2), Address 3 (Address 3), Sequence control (Sequence Control), Address 4 (Address 4), Quality of service control (quality of service control, QoS Control), and High throughput control (high throughput control, HT Control)") before "Frame body (Frame Body)" may be referred to as a MAC header (field).

Address 1 indicates a receiver address (RA, receiver address), Address 2 indicates a transmitter address (TA, transmitter address), and Address 3 depends on values of To DS and From DS fields in Frame Control.

When the data frame (when a transmitter is a STA and a receiver is an AP) is an uplink data frame, the Address 3 field indicates a destination address (destination address, DA).

When the data frame (when the transmitter is an AP and the receiver is a STA) is a downlink data frame, the Address 3 field indicates a source address (source address, SA).

Before the TDLS discovery process, the initiator may obtain a MAC address of the responder based on an ARP protocol or a proxy ARP protocol, to set a destination address field (DA) in the first frame to the MAC address of the responder. After receiving the first frame, the AP forwards the data frame. That is, another data frame is generated and sent to a second STA.

Optionally, in the TDLS discovery request frame, for a frame structure of a link identification information element carried in "Frame body (Frame Body)", refer to the implementation process shown in FIG. 2a.

It should be noted that the frame format shown in FIG. 2b may be further applied to another communication scenario other than the TDLS, for example, an association request frame (or an association response frame) receiving and sending scenario, a reassociation request frame (or a reassociation response frame) receiving and sending scenario, or another scenario. This is not limited herein.

Step 2: The responder sends a tunneled direct link setup discovery response (TDLS discovery response) frame to the initiator, where the TDLS discovery response frame carries related information of the responder and also includes a link identifier element, and content of the link identifier element is the same as content of the link identifier element in the TDLS discovery request frame. It should be noted that, if a value of a BSSID in the link identifier element in the TDLS discovery request received by the responder is different from a value of a BSSID of a BSS associated with the responder, the responder does not return the TDLS discovery response frame.

2. TDLS setup (setup) process: The initiator needs to set up a direct link between the initiator and the responder in the TDLS setup process. The following steps are specifically included:
Step 1: The initiator sends a tunneled direct link setup request (TDLS setup request) frame, where the TDLS setup request frame includes related information of the initiator and key generation related information, and is denoted as a tunneled direct link setup peer key handshake message 1 (TPK Handshake Message 1).

Optionally, a process in which the initiator sends the TDLS setup request frame may include: The initiator sends a third frame to the AP, where the third frame includes the TDLS setup request frame; and may further include: The AP sends a fourth frame to the responder, where the fourth frame includes the TDLS setup request frame.

Step 2: A response frame sends a tunneled direct link setup response (TDLS setup response) frame, where the TDLS setup response frame includes related information of the response frame and key generation related information, and is denoted as a tunneled direct link setup peer key handshake message 2 (TPK Handshake Message 2).

Optionally, a process in which the responder sends the TDLS setup response frame may include: The responder sends a fifth frame to the AP, where the fifth frame includes the TDLS setup response frame; and may further include: The AP sends a sixth frame to the responder, where the sixth frame includes the TDLS setup response frame.

Step 3: The initiator sends a TDLS setup confirm (TDLS setup confirm) frame, where the TDLS setup confirm frame includes related information of the initiator and key generation related information, and is denoted as a tunneled direct link setup peer key handshake message 3 (TPK Handshake Message 3).

Optionally, a process in which the initiator sends the TDLS setup confirm frame may include: The initiator sends a seventh frame to the AP, where the seventh frame includes the TDLS setup confirm frame; and may further include: The AP sends an eighth frame to the responder, where the eighth frame includes the TDLS setup confirm frame.

Optionally, the TPK handshake message 1, the TPK handshake message 2, the TPK handshake message 3 each include a robust security network element (robust security network element, RSNE) information element and a fast basic service set transition element (fast BSS Transition element, FTE) information element.

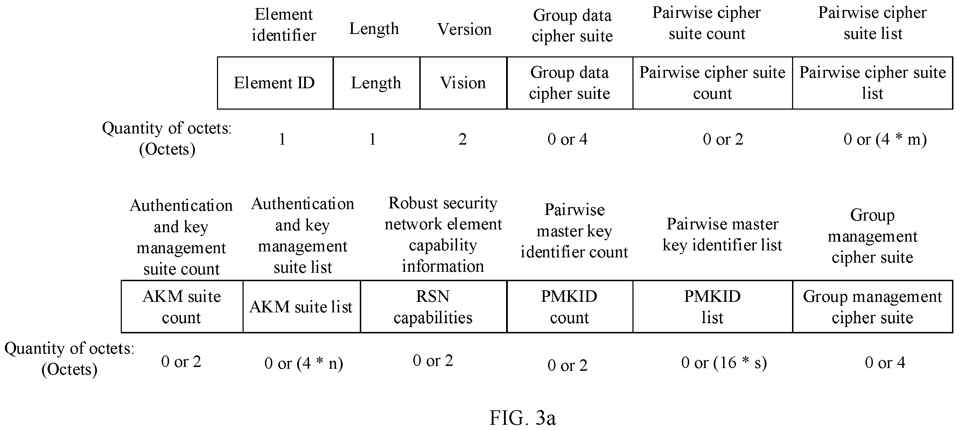

Optionally, an example of a frame format of the RSNE information element is shown in FIG. 3a. In FIG. 3a, the RSNE information element includes:

an element identifier (Element ID) field, which occupies 1 octet; a length (Length) field, which occupies 1 octet; a version (Vision) field, which occupies 2 octets; a group data cipher suite (Group Data Cipher Suite) field, which occupies 0 or 4 octets; a pairwise cipher suite count (Pairwise Cipher Suite Count) field, which occupies 0 or 2 octets; and a pairwise cipher suite list (Pairwise Cipher Suite List) field, which occupies 0 or (4 * m) (m is a quantity of pairwise cipher suites) octets. The RSNE information element further includes:

an authentication and key management suite count (authentication and key management suite count, AKM Suite Count) field, which occupies 0 or 2 octets; an authentication and key management suite list (authentication and key management suite list, AKM Suite List) field, which occupies 0 or (4 * n) (n is a quantity of authentication and key management suites) octets; a robust security network element capability information (RSN Capabilities) field, which occupies 0 or 2 octets; a pairwise master key identifier count (pairwise master key identifier count, PMKID count) field, which occupies 0 or 2 octets; a pairwise master key identifier list (pairwise master key identifier list, PMKID List) field, which occupies 0 or (16 * s) (s is a quantity of pairwise master key identifiers) octets; and a group management cipher suite (Group management Cipher Suite) field, which occupies 0 or 4 octets.

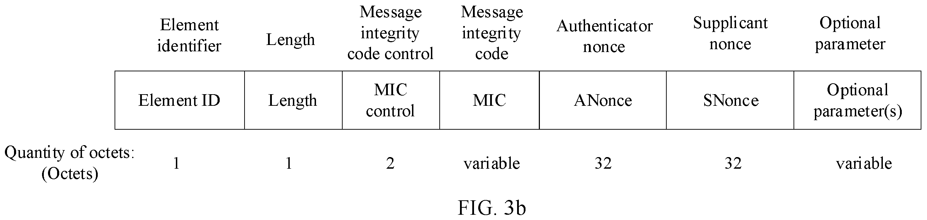

Optionally, an example of a frame format of the FTE information element is shown in FIG. 3b. In FIG. 3b, the FTE information element includes:

an element identifier (Element ID) field, which occupies 1 octet; a length (Length) field, which occupies 1 octet; a message integrity code control (message integrity code control, MIC Control) field, which occupies 2 octets; a message integrity code (message integrity code, MIC) field, where a quantity of occupied octets is a variable (variable); an authenticator nonce (authenticator nonce, ANonce) field, which occupies 32 octets; a supplicant nonce (supplicant nonce, SNonce) field, which occupies 32 octets; and an optional parameter (OptionalParameter(s)), where a quantity of occupied octets is a variable.

II. Multiple BSSID

A current 802.11 standard supports a feature of multiple basic service set identifier set (multiple basic service set identifier set, multiple BSSID, which may also be referred to as a multiple BSSID set). A basic function of the multiple BSSID set is to form a plurality of virtual APs in one device to serve different types of STAs. The plurality of virtual APs may perform joint management, to reduce management costs.

The multiple BSSID set may be a combination of some cooperative APs, and all the cooperative APs use a same operation set, a same channel number, and a same antenna port. Usually, in the multiple BSSID set, there is one AP corresponding to a transmitted BSSID (Transmitted BSSID), and another AP is an AP corresponding to a nontransmitted (Nontransmitted) BSSID. Information (that is, a multiple BSSID element) about the multiple BSSID set is carried in a management frame (for example, a beacon frame, a probe response frame, or a neighbor report) sent by an AP with a transmitted BSSID. Information about a BSSID of an AP with a nontransmitted BSSID is derived based on a multiple BSSID element, or the like in the received beacon frame, probe response frame, or neighbor report.

In addition, in a multiple BSSID technology, one physical AP may be virtualized into a plurality of logical APs, each virtual AP manages one BSS, and different virtual APs usually have different SSIDs and permission, for example, a security mechanism or a transmission opportunity. A BSSID of one virtual AP in the plurality of virtual APs is configured as a transmitted (Transmitted) BSSID, the virtual AP may be referred to as a transmitted (Transmitted) AP, a BSSID of another virtual AP is configured as a nontransmitted BSSID, and the virtual AP may be referred to as a nontransmitted (nontransmitted) AP. Usually, a plurality of APs of the multiple BSSID may also be understood as a plurality of cooperative AP devices into which one AP device is virtualized. Only an AP whose BSSID is a transmitted BSSID can send a beacon (beacon) frame and a probe response (Probe Response) frame. If a probe request (Probe Request) frame sent by a STA is destined for an AP whose BSSID is a nontransmitted BSSID in the multiple BSSID set, the AP whose BSSID is a transmitted BSSID needs to assist in returning a probe response frame. The beacon frame sent by the AP whose BSSID is a transmitted BSSID includes a multiple BSSID element, and another AP with a nontransmitted BSSID cannot send a beacon frame. Association identifiers (association identifier, AID) allocated by the plurality of virtual APs to stations managed by the plurality of virtual APs share one space. That is, AIDs allocated to stations in a plurality of virtual BSSs cannot be the same.

Optionally, as shown in Table 1, the multiple BSSID element includes an element ID, a length, a max BSSID indicator, and a subelement. A value (n) of the max BSSID indicator field is used to calculate a maximum quantity $2^n$ (that is, 2 raised to the power of n) of BSSIDs included in the multiple BSSID set. Optional subelements include information about each nontransmitted BSSID. A receiving end may calculate a value of each BSSID in the multiple BSSID set based on a reference BSSID, the max BSSID indicator, and a BSSID index. Each BSSID includes 48 bits. A value of high-order (48-n) bits of each BSSID in the plurality of BSSID set is the same as a value of high-order (48-n) bits of the reference BSSID, and a value of least low-order n bits of each BSSID in the multiple BSSID set is obtained by performing a modulo operation on a sum of a value of least low-order n bits of the reference BSSID and a value of the BSSID index x by 2^n. The reference BSSID (that is, the transmitted BSSID) is carried in a BSSID field in a MAC header of a frame (for example, a beacon frame) including the multiple BSSID element. For a specific calculation method, refer to the 802.11-2016 standard protocol.

**Table 1**

|  | Element ID | Length | Max BSSID indicator | Optional subelement |
|---|---|---|---|---|
| Octet | 1 | 1 | 1 | Variable |

The "optional subelement" in Table 1 may be shown in Table 2.

**Table 2**

| Subelement ID | Name | Extension |
|---|---|---|
| 0 | Nontransmitted BSSID profile | Non-extensible |
| 1-220 | Reserved | |
| 221 | Vendor specific | Vendor defined |
| 222-255 | Reserved | |

Optionally, in Table 2, the nontransmitted basic service set identifier profile (Nontransmitted BSSID profile) includes one or more APs that have nontransmitted BSSIDs or one or more elements of a directional multi-gigabit station (directional multi-gigabit station, DMG STA).

III. Address resolution protocol (address resolution protocol, ARP)

The address resolution protocol is a transmission control protocol (transmission control protocol, TCP) TCP/internet protocol (internet protocol, IP) of a physical address based on an IP address. When sending information, a host broadcasts an ARP request including an IP address of a target to all hosts in a local area network, and receives a returned message, to determine a physical address of the target. After receiving the returned message, the host stores the IP address and the physical address in a local ARP cache, and retains the IP address and the physical address for a period of time. When the IP address and the physical address are requested next time, the host directly queries the ARP cache to save resources.

The address resolution protocol operates on a network segment, and a proxy ARP (Proxy ARP) operates on different network segments. The ARP proxy is usually used by a device such as a router, to replace a host one another network segment to respond to an ARP request from a host on a same network segment. For example, a host 1 (an address is 192.168.20.66/24) needs to send a packet to a host 2 (an address is 192.168.20.20/24). Because the host 1 does not learn of existence of a subnet and the host 1 does not learn that the host 1 and the host 2 are on the same network segment, the host 1 sends an ARP protocol request broadcast packet to request a MAC address of 192.168.20.20. In this case, the router identifies that a target address of a packet belongs to another subnet. Therefore, the router returns a MAC address of the router to the host 1. Then, the host 1 sends, to the MAC address of the router, a data packet to be sent to the host 2, and the router forwards the data packet to the host 2. A proxy ARP protocol enables a subnet network topology to be transparent to the host (in other words, the router uses the MAC address of the router as a MAC address of a PC 2 to communicate with the host 1; in other words, the router deceives the host 1 by using an untrue MAC address of the host 2).

4. Multi-link element

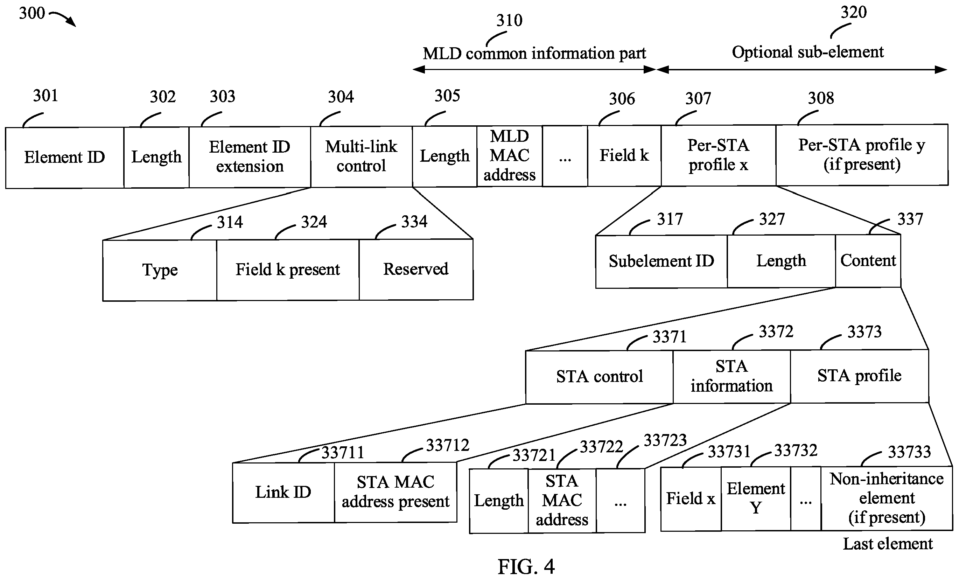

FIG. 4 is a schematic diagram of a format 300 of a multi-link element. As shown in FIG. 4, the multi-link element includes an element ID (Element Identifier) field 301, a length (Length) field 302, an element ID extension (Element ID Extension) field 303, a multi-link control (Multi-Link Control) field 304, and a common information field. The common information field includes a length field 305, an MLD MAC address (MLD MAC address) field, ..., a field k (Field k) 306, for example, a capability field, a per-STA profile x (Per-STA Profile x) field 307, and a per-STA profile y (per-STA profile y) field (if present) 308.

An MLD common information part 310 carries related information of an MLD. The per-STA profile x field 307 and the per-STA profile y field (if present) 308 are optional subelements 320, and each represent a per-STA profile (per-STA profile).

Further, the multi-link control field 304 includes a type (Type) field 314, a field k present field 324, and a reserved (Reserved) field 334. For example, the type field 314 may be a basic type, or may be a probe request type.

Optionally, the multi-link element further includes a link information part, and the link information part includes one or more "per-STA profile" fields. The per-STA profile x field 307 includes a subelement ID (Subelement ID) field 317, a length (Length) field 327, and a content field 337. The content field 337 includes a per-STA control field (Per-STA control field) 3371, a STA information (STAinformation) field 3372, and a STA profile field 3373. The per-STA control field 3371 includes a link ID (Link ID) field 33711 and a STA MAC address present (STA MAC Address present) field 33712. The STA information field 3372 includes a length field 33721, a STA MAC address (STA MAC Address) field 33722, and the like. The STA profile field 3373 includes a field x 33731, ..., an element Y (Element Y) field 33732, ..., and a non-inheritance element (Non-Inheritance element) field (if present) 33733.

It may be understood that another field may be further included between the MLD MAC address field 305 and the field k 306 in FIG. 4, and is not shown herein. The STA information field 3372 further includes another field, the STA profile field 33733 further includes another field or element, for example, a field 1, a field 2, ..., an element 1, an element 2, ..., and the non-inheritance element 33733 is the last element.

It can be learned from the foregoing descriptions that more wireless devices support multi-link communication, for example, simultaneously perform communication on 2. 4 gigahertz (GHz), 5 GHz, and 6 GHz frequency bands, or simultaneously perform communication on different channels at a same frequency band, to improve a communication rate between the devices. Such a device is usually referred to as a multi-link device (multi-link device, MLD). The multi-link device may be an access point multi-link device (access point multi-link device, AP MLD) that includes a plurality of access points (access point, AP), or may be a non-access point multi-link device (non-access point multi-link device, non-AP MLD) that includes a plurality of stations (station, STA).

Currently, in WLAN communication, that a transmitter of a radio frame is a station in a multi-link station device is used as an example, and a receiver of the radio frame may be another multi-link device or a single-link device.

In some scenarios, a MAC header field included in a radio frame received by the receiver of a radio frame may include address information of the transmitter of a radio frame, to indicate, to the receiver of the radio frame, that the radio frame is from the transmitter.

In some other scenarios, a radio frame sent by the transmitter of the radio frame possibly can be received by the receiver of the radio frame only when the radio frame is forwarded by a forwarding device, so that the MAC header field included in the radio frame received by the receiver of the radio frame may include address information of the forwarding device, to indicate, to the receiver of the radio frame, that the radio frame is from the forwarding device.

However, in the foregoing plurality of scenarios, for the receiver of the radio frame, whether the address information of the transmitter needs to be obtained and how to obtain the address information of the transmitter are technical problems to be urgently resolved.

To resolve the foregoing problem, this application provides a communication method and a communication apparatus, so that a receiver of a first radio frame flexibly chooses, based on a first field in a first radio frame, whether to receive MAC address information of a first STA in a multi-link element, and may accurately learn of the MAC address information of the first STA when the first field indicates that the multi-link element includes the MAC address information of the first STA.

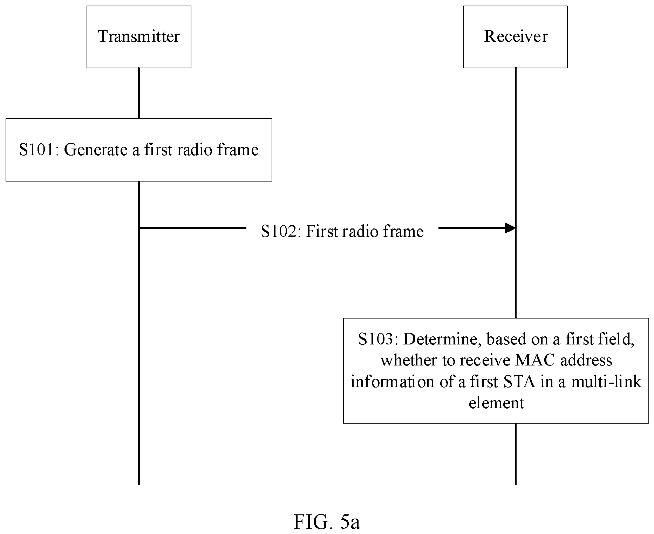

FIG. 5a is a schematic diagram of a communication method according to this application. The method includes the following steps.

S101: A transmitter generates a first radio frame.

In this embodiment, the transmitter receives the first radio frame in step S101. The first radio frame includes a multi-link element, the multi-link element includes a first field, and the first field indicates whether the multi-link element includes MAC address information of a first STA.

S102: The transmitter sends the first radio frame.

In this embodiment, the transmitter sends the first radio frame in step S102, and correspondingly, a receiver receives the first radio frame in step S102.

Optionally, the first AP may perform sending preprocessing on the first radio frame, and send, in step S102, a processing result obtained through sending preprocessing. For example, sending preprocessing may include manners such as encryption and scrambling. Correspondingly, the receiver may receive the processing result (obtained by performing sending preprocessing on the first radio frame), and perform receiving preprocessing on the processing result in step S102 to obtain a management frame. For example, receiving preprocessing may include manners such as decryption and descrambling.

S103: The receiver determines, based on the first field, whether to receive the MAC address information of the first STA in the multi-link element.

In this embodiment, after the receiver receives the first radio frame in step S102, in step S103, the receiver determines, based on the first field in the multi-link element, whether to receive the MAC address information of the first STA in the multi-link element.

It should be noted that, in an implementation shown in FIG. 5a, the transmitter of the first radio frame may be denoted as a first STA, and a receiver of the first radio frame may be denoted as a second STA.

Specifically, as the transmitter of the first radio frame, the "first STA" is a "STA" indicated by a per-STA profile (Per-STA Profile) in the multi-link element. The first radio frame carrying the multi-link element is sent by an MLD. When the MLD is an AP MLD, the per-STA profile indicates profile information of an AP in the AP MLD (in other words, the "first STA" is an AP). When the MLD is a non-AP MLD, the per-STA profile indicates profile information of a STA in the non-AP MLD (in other words, the "first STA" is a STA).

In addition, in the implementation shown in FIG. 5a, as the receiver of the first radio frame, the "second STA" that receives the first radio frame carrying the multi-link element may be a single-link device, or may be a "STA" in the MLD. When the second STA is a "STA" in the AP MLD, the second STA is an AP; or when the second STA is a "STA" in the non-AP MLD, the second STA is a STA.

In a possible implementation, in the first radio frame generated by the first STA in step S101, the first field is located in a presence bitmap (Presence Bitmap) field in the multi-link element. Specifically, the first field is located in the presence bitmap field of the multi-link element included in the first radio frame, so that the receiver of the first radio frame can determine the first field based on the presence bitmap field in step S103, and determine, based on the first field, whether to receive the MAC address information of the first STA in the multi-link element.

For example, a frame format in FIG. 4 is an implementation example of the multi-link element. In an optional implementation, the presence bitmap (Presence Bitmap) field may be specifically field k present (324) in FIG. 4, and one (or more) bits in the field k present (324) are used as the first field.

In a possible implementation, when a value of the first field is a first value, the first field indicates that the multi-link element includes the MAC address information of the first STA, and the multi-link element includes the MAC address information of the first STA.

Optionally, when the value of the first field is a second value, the first field indicates that the multi-link element does not include the MAC address information of the first STA.

Optionally, the first value is different from the second value.

For example, the first field may be implemented by using one or more bits. Herein, an implementation process of one bit is used as an example for description. In other words, a value corresponding to the first field may be "1" or "0".

For example, when the first value is "1" and the second value is "0", the first field indicates, by using the first value (that is, the value is "1"), that the multi-link element includes the MAC address information of the first STA, and the first field indicates, by using the second value (that is, the value is "0"), that the multi-link element does not include the MAC address information of the first STA.

For another example, when the first value is "0" and the second value is "1", the first field indicates, by using the first value (that is, the value is "0"), that the multi-link element includes the MAC address information of the first STA, and the first field indicates, by using the second value (that is, the value is "1"), that the multi-link element does not include the MAC address information of the first STA.

The following describes, in different implementations, different meanings indicated by the first field.

Implementation 1: In the first radio frame generated by the first STA in step S101, when the first field indicates that the multi-link element includes the MAC address information of the first STA, the multi-link element includes a common information (Common Info) field, and the MAC address information of the first STA is located in the common information field.

Therefore, for the transmitter (that is, the first STA) of the first radio frame, the MAC address information of the first STA may be carried in the multi-link element based on the first field, and an indication of the first field is applicable to a communication scenario in which the receiver of the first radio frame needs to receive the MAC address information of the first STA. Correspondingly, the receiver (that is, the second STA) of the first radio frame may determine, based on the first field, that the MAC address information of the first STA needs to be received, and receive the MAC address information of the first STA in the multi-link element. That is, the second STA may accurately learn of the MAC address information of the first STA.

Specifically, the MAC address information of the first STA is located in the common information field of the multi-link element included in the first radio frame, so that the receiver of the first radio frame can determine the MAC address information of the first STA based on the common information field in step S103.

Optionally, the MAC address information of the first STA may also be located at another location in the multi-link element.

For example, it can be learned from the foregoing descriptions of a tunneled direct link setup (tunneled direct link setup, TDLS) that a link identification information element shown in FIG. 2a may be carried in a radio frame transmitted during TDLS-based communication.

If a TDLS-based communication process does not relate to a multi-link communication scenario, that is, if a STA is a single-link device, when the STA sends a radio frame, the STA may set a value of a field "TDLS initiator station address" shown in FIG. 2a to the MAC address information of the STA, to indicate that the STA is a TDLS initiator in the TDLS-based communication process.

If a TDLS-based communication process relates to a multi-link communication scenario, that is, when a STA is a STA in a multi-link device, the STA serves as a transmitter, and may execute the communication process shown in FIG. 5a. In other words, the first radio frame sent by the STA (that is, the first STA) carries a multi-link element indicating multi-link information of an MLD in which the STA is located.

An example in which the first radio frame sent by the first STA in step S102 is a TDLS discovery request frame transmitted in a TDLS-based communication process is used for description. In the first radio frame, the value of the TDLS initiator STA address field in the link identification information element may be an MLD MAC address of a first MLD. Such a setting is to keep a value of a SA of a data frame forwarded by the AP to the second STA to be consistent with the MLD MAC address of the first MLD, so that when the second STA receives the forwarded data frame, the second STA can obtain consistent initiator addresses based on the SA or based on the TDLS initiator STA address, to avoid confusion.

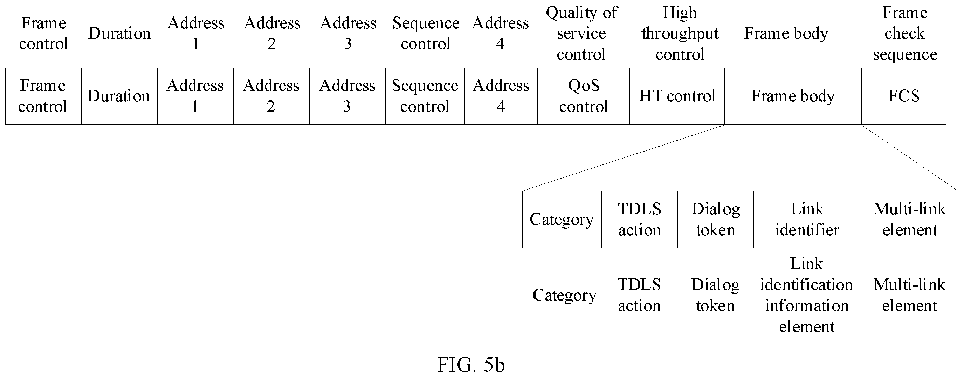

Specifically, the TDLS discovery request frame may be encapsulated in a data frame (denoted as a first data frame) sent by the first STA to an AP associated with the first STA. For a frame format of the first data frame, refer to FIG. 5b. Compared with FIG. 2b, FIG. 5b describes in detail information included in a "frame body (Frame Body)". The TDLS discovery request frame may be specifically carried in the "frame body (Frame Body)". As shown in FIG. 5b, the "frame body (Frame Body)" includes the following information:

a category (Category), a TDLS action (TDLS Action), a dialog token (Dialog Token), a link identification information element (Link Identifier), and a multi-link element (Multi-Link element).

In the first data frame, an address 1 of the first data frame is a MAC address of an AP, an address 2 is an address of the first STA, and an address 3 is an MLD MAC address of the second MLD.

Then, when the TDLS discovery request frame is forwarded by the AP, the TDLS discovery request frame is carried in another data frame (denoted as a second data frame) for sending (for a frame format of the second data frame, refer to FIG. 2b). In the second data frame, an address 1 of the second data frame is a MAC address of the second STA, an address 2 is a MAC address of an AP (it is noted that because the MAC address may be forwarded on another link, the address may be different from the MAC address of the AP in the first data frame), and an address 3 is the MLD MAC address of the first MLD. Consequently, when receiving the second data frame, the second STA cannot learn of the MAC address of the first STA, and consequently, cannot obtain the address information of the first STA in a TDLS discovery process.

To resolve this problem, when sending the TDLS discovery request frame, the first STA use, to carry the MAC address of the first STA, the first data frame that carries the TDLS discovery request frame. The MAC address of the first STA may be carried in a multi-link element in the first data frame.

Therefore, in this scenario, the first STA may use the multi-link element in the first radio frame to carry the first field, and the first field indicates that the multi-link element includes the MAC address information of the first STA, so that the second STA determines, based on the first field, that the multi-link element in the first radio frame carries the MAC address information of the first STA. Therefore, when the second STA needs to obtain the MAC address information of the first STA, the second STA may receive the MAC address information of the first STA based on the indication of the first field. In addition, after learning of the MAC address information of the first STA, the second STA may further communicate with the first STA based on the MAC address information of the first STA and the TDLS.

Optionally, a communication process corresponding to an implementation solution shown in FIG. 5a may be a TDLS-based communication process (or another communication process, which is not limited herein). In other words, a generation process, a sending process, and a receiving process of the first radio frame in FIG. 5a are TDLS-based communication processes.

When the first field indicates that the multi-link element includes the MAC address information of the first STA, the first radio frame includes any one of the following:

a TDLS discovery request frame, a TDLS discovery response frame, a TDLS setup request frame, a TDLS setup response frame, a TDLS setup confirm frame, a response frame of the TDLS setup confirm frame, a TDLS data frame, and a response frame of the TDLS data frame.

Optionally, the transmitter (for example, the first STA) of the first radio frame is an initiator in the TDLS-based communication process, and the receiver (for example, the second STA) of the first radio frame is a responder in the TDLS-based communication process.

Optionally, the transmitter (for example, the first STA) of the first radio frame is a responder in the TDLS-based communication process, and the receiver (for example, the second STA) of the first radio frame is an initiator in the TDLS-based communication process.

For example, that the frame format in FIG. 4 is an implementation example of the multi-link element is used to describe Implementation 1. In an optional implementation, the presence bitmap (Presence Bitmap) field may be specifically field k present (324) in FIG. 4, and one (or more) bits in the field k present (324) are used as the first field. In addition, a field k (306) may carry the MAC address of the first STA.

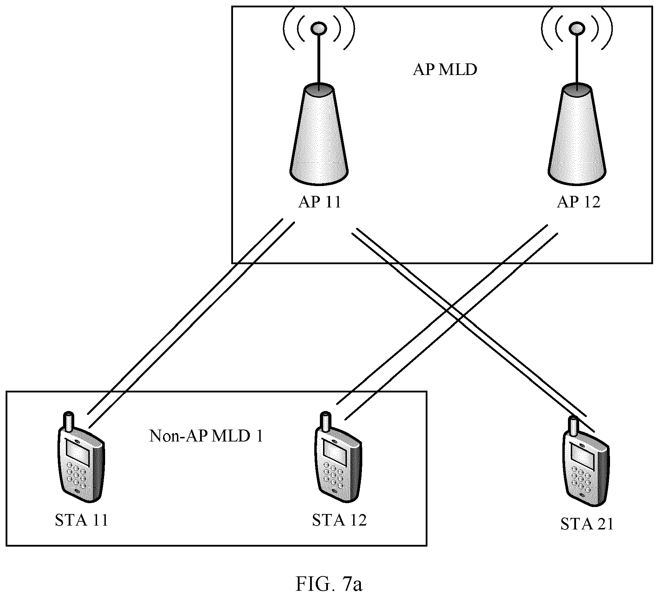

For example, with reference to FIG. 7a to FIG. 7d, the following provides example descriptions of Implementation 1 (in the TDLS-based communication process) in the communication scenario in FIG. 5a.

It should be noted that, in scenarios shown in FIG. 7a to FIG. 7d, double straight lines between an AP and a STA indicate that the AP is associated with the STA (or the STA is associated with the AP). In addition, because Implementation 1 relates to the TDLS-based communication process, the transmitter (for example, the first STA) of the first radio frame is specifically a STA in a non-AP MLD, and the receiver (for example, the second STA) of the first radio frame is specifically a STA in another non-AP MLD, or the receiver (for example, the second STA) of the first radio frame is specifically a single-link device and the single-link device is a STA.

For example, in a scenario shown in FIG. 7a, the first STA is a STA in a non-AP MLD (for example, the first MLD), and the second STA is a single-link device. The non-AP MLD in which the first STA is located is a non-AP MLD 1 in FIG. 7a, the first STA may be a STA 11 in FIG. 7a, and the STA 11 is associated with an AP 11 in an AP MLD.

It can be learned from the scenario shown in FIG. 7a that, because the STA 11 and the STA 21 are associated with a same BSS (that is, a BSS in which the AP 11 is located), the STA 21 may serve as the second STA and communicate with the first STA based on the TDLS.

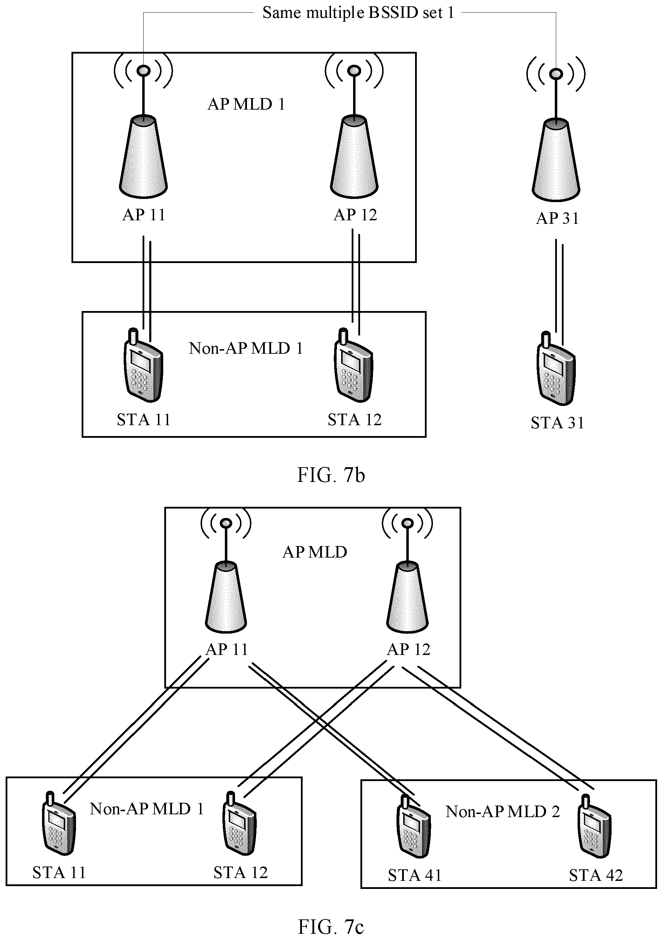

For another example, in a scenario shown in FIG. 7b, the first STA is a STA in a non-AP MLD (for example, the first MLD), and the second STA is a single-link device. The non-AP MLD in which the first STA is located is a non-AP MLD 1 in FIG. 7b, the first STA may be a STA 11 in FIG. 7a, and the STA 11 is associated with an AP 11 in an AP MLD 1.

A same communication parameter (for example, an operation set, a channel number, and an antenna port) is used for different APs in a same multiple BSSID set, so that STAs associated with the different APs in the same multiple BSSID set may also need to perform communication based on the TDLS. Therefore, in FIG. 7b, because a BSS in which an AP 31 is located and a BSS in which the AP 11 is located are located in a same multiple BSSID set 1 (Same Multiple BSSID set 1), in other words, the AP 11 and the AP 31 are located in a same multiple BSSID set, a STA 31 may serve as a second STA and communicate with the first STA based on the TDLS.

For another example, in a scenario shown in FIG. 7c, the first STA is a STA in a non-AP MLD (for example, the first MLD), and the second STA is a STA in another non-AP MLD (for example, the second MLD). The non-AP MLD in which the first STA is located is a non-AP MLD 1 in FIG. 7c, the first STA may be a STA 11 in FIG. 7c, and the STA 11 is associated with an AP 11 in an AP MLD. The non-AP MLD in which the second STA is located is a non-AP MLD 2 in FIG. 7c, the second STA may be a STA 41 in FIG. 7c, and the STA 41 is associated with an AP 11 in an AP MLD.

It can be learned from the scenario shown in FIG. 7c that, because the STA 41 and the STA 11 are separately associated with a same BSS (that is, a BSS in which the AP 11 is located), the STA 41 may serve as the second STA and communicate with the first STA based on the TDLS.

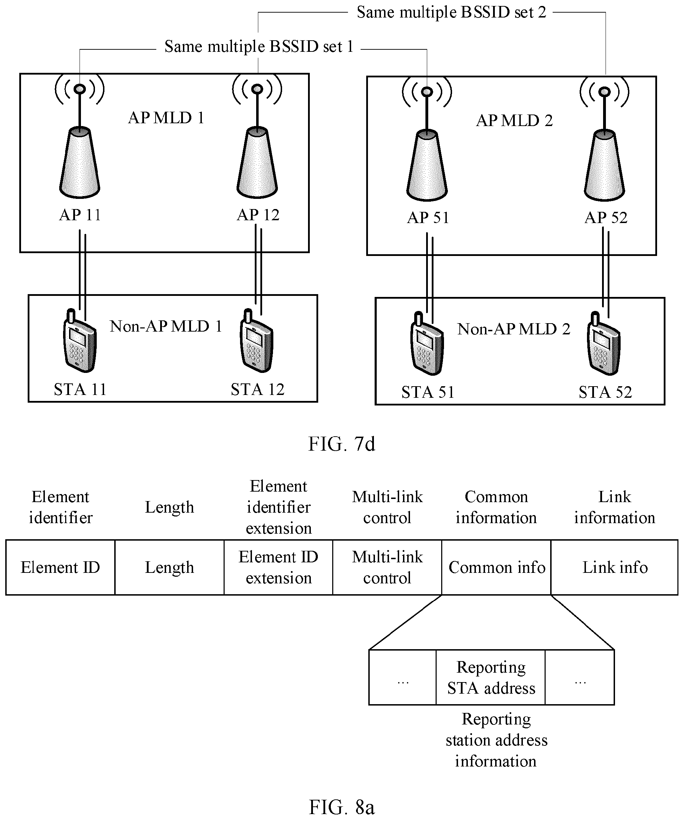

For another example, in a scenario shown in FIG. 7d, the first STA is a STA in a non-AP MLD (for example, the first MLD), and the second STA is a STA in another non-AP MLD (for example, the second MLD). The non-AP MLD in which the first STA is located is a non-AP MLD 1 in FIG. 7d, the first STA may be a STA 11 in FIG. 7d, and the STA 11 is associated with an AP 11 in an AP MLD. The non-AP MLD in which the second STA is located is a non-AP MLD 2 in FIG. 7d, the second STA may be a STA 51 in FIG. 7d, and the STA 51 is associated with an AP 51 in an AP MLD 2.

A same communication parameter (for example, an operation set, a channel number, and an antenna port) is used for different APs in a same multiple BSSID set, so that STAs associated with the different APs in the same multiple BSSID set may also need to perform communication based on the TDLS. Therefore, in FIG. 7d, because a BSS in which an AP 11 is located and a BSS in which the AP 51 is located are located in a same multiple BSSID set 1 (Same Multiple BSSID set 1), in other words, the AP 11 and the AP 51 are located in a same multiple BSSID set, the STA 51 may serve as the second STA and communicate with the first STA based on the TDLS.

Implementation 2: In the first radio frame generated by the first STA in step S101, when the first field indicates that the multi-link element does not include the MAC address information of the first STA, the MAC address information of the first STA is located at another location in the first radio frame other than the multi-link element, or the first radio frame does not carry the MAC address information of the first STA.

Therefore, for the transmitter of the first radio frame, whether the multi-link element includes the MAC address information of the first STA may be flexibly set in the multi-link element based on the first field. Correspondingly, the receiver of the first radio frame flexibly chooses, based on the first field, whether to receive the MAC address information of the first STA in the multi-link element.

For example, the communication process shown in FIG. 5a may also be another communication scenario between multi-link devices other than the TDLS. In this scenario, the receiver of the first radio frame may not need to learn of the MAC address information of the first STA (or at another location other than the multi-link element), for example, a scenario of receiving and sending an association request frame (or an association response frame), a scenario of receiving and sending a reassociation request frame (or a reassociation response frame), or another scenario. This is not limited herein.

In a possible implementation, in a process of implementing, without forwarding performed by a forwarding device, a process of sending and receiving the first radio frame, the first radio frame may use the MAC header field to carry the MAC address information of the first STA. In an implementation process of the frame format shown in FIG. 2b, the MAC address information of the first STA may be carried in the A2 field. The first field indicates that the multi-link element does not include the MAC address information of the first STA, so that the receiver of the first radio frame can receive the MAC address information of the first STA in the MAC header field. In addition, because the first radio frame does not need to use the multi-link element to carry information (that is, the MAC address information of the first STA) the same as that in the MAC header field, transmission of redundant data can be reduced to some extent, and communication efficiency can be improved.

In another possible implementation, the receiver of the first radio frame may not need to learn of the MAC address information of the first STA. The receiver of the first radio frame may require only some information in the multi-link element, and does not need to learn of the MAC address information of the first STA. For example, the receiver of the first radio frame needs to learn of an "MLD MAC address" of an MLD in which the first STA is located in the frame format of the multi-link element shown in FIG. 4, so that when communicating with the MLD, the receiver of the first radio frame does not need to learn of the MAC address information of the first STA. For another example, the receiver of the first radio frame needs to learn of "per-STA profile x 307" of another STA in an MLD in which the first STA is located in the frame format of the multi-link element shown in FIG. 4, so that when communicating with the another STA in the MLD, the receiver of the first radio frame does not need to learn of the MAC address information of the first STA.

Optionally, the first radio frame further includes a target field, and when the first field indicates that the multi-link element does not include the MAC address information of the first STA, the target field includes the MAC address information of the first STA. The target field is different from the multi-link element.

Optionally, the target field may be a medium access control header (medium access control header, MAC Header) field.

Optionally, in the example shown in FIG. 2b, other information (for example, at least one of "Frame control (Frame Control), Duration (Duration), Address 1 (Address 1), Address 2 (Address 2), Address 3 (Address 3), Sequence control (Sequence Control), Address 4 (Address 4), Quality of service control (quality of service control, QoS Control), and High throughput control (high throughput control, HT Control)") before "Frame body (Frame Body)" may be referred to as a MAC header (field).

Optionally, when the first field indicates that the multi-link element does not include the MAC address information of the first STA, the first radio frame includes any one of the following:

an association request frame, a reassociation request frame, an association response frame, a reassociation response frame, or a probe response frame.

Optionally, when the first field indicates that the multi-link element does not include the MAC address information of the first STA, a communication process corresponding to an implementation solution shown in FIG. 5a may be an association process, a reassociation process, a probe process, or the like of the multi-link device.

For example, with reference to FIG. 7a to FIG. 7d, the following provides example descriptions of Implementation 2 in the communication scenario in FIG. 5a.

It should be noted that, in scenarios shown in FIG. 7a to FIG. 7d, double straight lines between an AP and a STA indicate that the AP is associated with the STA (or the STA is associated with the AP). In addition, because Implementation 2 relates to a communication process of the first radio frame including the multi-link element, usually, the transmitter (for example, the first STA) of the first radio frame is specifically a STA in a non-AP MLD, and the receiver (for example, the second STA) of the first radio frame is specifically an AP (or a single-link device) in an AP MLD; or the transmitter (for example, the first STA) of the first radio frame is specifically an AP in an AP MLD, and the receiver (for example, the second STA) of the first radio frame is specifically a STA (or a single-link device) in a non-AP MLD; or the transmitter (for example, the first STA) of the first radio frame is specifically a STA in a non-AP MLD, and the receiver (for example, the second STA) of the first radio frame is specifically a STA (or a single-link device) in another non-AP MLD; or the transmitter (for example, the first STA) of the first radio frame is specifically an AP in an AP MLD, and the receiver (for example, a second STA) of the first radio frame is specifically an AP (or a single-link device) in another AP MLD. In the following example, only an example in which the transmitter (for example, the first STA) of the first radio frame is specifically a STA in a non-AP MLD and the receiver (for example, the second STA) of the first radio frame is specifically an AP in an AP MLD is used for description.

For example, in a scenario shown in FIG. 7a, the method in Implementation 2 may be applied to a communication process between any STA in a non-AP MLD 1 and any AP in an AP MLD. To be specific, the first STA may be any STA in the non-AP MLD 1, and the second STA may be any AP in the AP MLD.

For another example, in a scenario shown in FIG. 7b, the method in Implementation 2 may be applied to a communication process between any STA in a non-AP MLD 1 and any AP in an AP MLD. To be specific, the first STA may be any STA in the non-AP MLD 1, and the second STA may be any AP in the AP MLD.

For another example, in a scenario shown in FIG. 7c, the method in Implementation 2 may be applied to a communication process between any STA in a non-AP MLD 1 (or a non-AP MLD 2) and any AP in an AP MLD. To be specific, the first STA may be any STA in the non-AP MLD 1 (or the non-AP MLD 2), and the second STA may be any AP in the AP MLD.

For another example, in a scenario shown in FIG. 7d, the method in Implementation 2 may be applied to a communication process between any STA in a non-AP MLD 1 and any AP in an AP MLD 1. To be specific, the first STA may be any STA in the non-AP MLD 1 (or the non-AP MLD 2), and the second STA may be any AP in the AP MLD.

For another example, in a scenario shown in FIG. 7d, the method in Implementation 2 may be applied to a communication process between any STA in a non-AP MLD 2 and any AP in an AP MLD 2. To be specific, the first STA may be any STA in the non-AP MLD 2, and the second STA may be any AP in the AP MLD 2.

Based on the technical solution, in a WLAN communication process, the first radio frame carries a multi-link element indicating station information of an MLD in which the first STA is located, and the multi-link element includes the first field indicating whether the multi-link element includes the MAC address information of the first STA. When the first field indicates that the multi-link element includes the MAC address information of the first STA, a receiver (for example, a second STA) of the first radio frame may determine, based on the first field, that the MAC address information of the first STA is located in the multi-link element. Therefore, the first field indicating whether the multi-link element includes the MAC address information of the first STA is set in the first radio frame, so that address information of the transmitter is indicated more flexibly, to adapt to a plurality of communication scenarios. Correspondingly, the receiver of the first radio frame flexibly chooses, based on the first field in the first radio frame, whether to receive the MAC address information of the first STA in the multi-link element, and may accurately learn of the MAC address information of the first STA when the first field indicates that the multi-link element includes the MAC address information of the first STA.

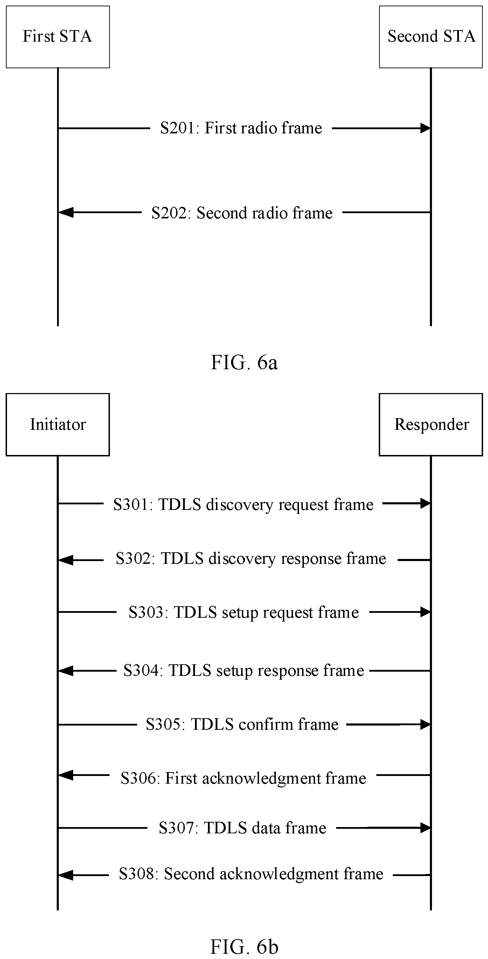

FIG. 6a is a schematic diagram of a communication method according to an embodiment of this application. The method includes the following steps.

S201: A first STA sends a first radio frame.

In this embodiment, the first STA sends the first radio frame in step S201, and correspondingly, a second STA receives the first radio frame in step S201. The first radio frame includes a MAC address of the first STA and a multi-link element.

Optionally, the MAC address of the first STA is carried in the multi-link element; or the MAC address of the first STA is carried in another information element different from the multi-link element in the first radio frame.

S202: The second STA sends a second radio frame.

In this embodiment, the second STA sends the second radio frame in step S202, and correspondingly, the first STA receives the second radio frame in step S202.

Based on the technical solution shown in FIG. 6a, in a WLAN communication process, the first radio frame sent by the first STA in step S201 carries a multi-link element indicating station information of a first MLD in which the first STA is located, and the first multi-link element includes the MAC address information of the first STA. A receiver (for example, a second STA) of the first radio frame may obtain the MAC address information of the first STA based on the multi-link element. Therefore, the receiver of the first radio frame may receive the MAC address information of the first STA from a location at which the multi-link element in the first radio frame is located, so that the receiver of the first radio frame can effectively learn of the MAC address information of the first STA.

Optionally, after the receiver of the first radio frame learns of the MAC address information of the first STA, the receiver of the first radio frame may determine, based on the MAC address information of the first STA, that a transmitter of the first radio frame is the first STA. In a radio frame sent when the receiver of the first radio frame communicates with another device (that is, another device different from the first STA), the receiver of the first radio frame may use the radio frame to carry related information to indicate a related feature of the first STA. For example, the related information may include an "MLD MAC address" of an MLD in which the first STA is located in a frame format of a multi-link element shown in FIG. 4, to indicate, to another device, that the first STA is located in the MLD. For another example, the related information may include "per-STA profile x 307" of another STA in the MLD in which the first STA is located in the frame format of the multi-link element shown in FIG. 4, to indicate, to another device, another STA in the MLD in which the first STA is located.

In addition, in some implementations, after the receiver of the first radio frame learns of the MAC address information of the first STA, subsequently, the receiver of the first radio frame may further communicate with the first STA based on the MAC address information of the first STA and a TDLS, to improve communication efficiency.

For example, it can be learned from the foregoing descriptions of a tunneled direct link setup (tunneled direct link setup, TDLS) that a link identification information element shown in FIG. 2a may be carried in a radio frame transmitted during TDLS-based communication.

If a multi-link communication scenario is not related, that is, if a STA is a single-link device, when the STA sends a radio frame, the STA may set a value of a field "TDLS initiator station address" shown in FIG. 2a to the MAC address information of the STA, to indicate that the STA is a TDLS initiator in the TDLS-based communication process.

If a multi-link communication scenario is related, that is, when a STA is a STA in a multi-link device, the STA serves as a transmitter, and may execute the communication process shown in FIG. 6a. In other words, the first radio frame sent by the STA (that is, the first STA) carries a multi-link element indicating multi-link information of an MLD in which the STA is located.

An example in which the first radio frame sent by the first STA in step S201 is a TDLS discovery request frame transmitted in a TDLS-based communication process is used for description. In the first radio frame, the value of the TDLS initiator STA address field in the link identification information element may be an MLD MAC address of a first MLD. Such a setting is to keep a value of a SA of a data frame forwarded by the AP to the second STA to be consistent with the MLD MAC address of the first MLD, so that when the second STA receives the forwarded data frame, the second STA can obtain consistent initiator addresses based on the SA or based on the TDLS initiator STA address, to avoid confusion.

Specifically, the TDLS discovery request frame may be encapsulated in a data frame (denoted as a first data frame) sent by the first STA to an AP associated with the first STA. For a frame format of the first data frame, refer to FIG. 5b. Compared with FIG. 2b, FIG. 5b describes in detail information included in a "frame body (Frame Body)". The TDLS discovery request frame may be specifically carried in the "frame body (Frame Body)". As shown in FIG. 5b, the "frame body (Frame Body)" includes the following information:

a category (Category), a TDLS action (TDLS Action), a dialog token (Dialog Token), a link identification information element (Link Identifier), and a multi-link element (Multi-Link element).

In the first data frame, an address 1 of the first data frame is a MAC address of an AP, an address 2 is an address of the first STA, and an address 3 is an MLD MAC address of the second MLD.

Then, when the TDLS discovery request frame is forwarded by the AP, the TDLS discovery request frame is carried in another data frame (denoted as a second data frame) for sending (for a frame format of the second data frame, refer to FIG. 8a). In the second data frame, an address 1 of the second data frame is a MAC address of the second STA, an address 2 is a MAC address of an AP (it is noted that because the MAC address may be forwarded on another link, the address may be different from the MAC address of the AP in the first data frame), and an address 3 is the MLD MAC address of the first MLD. Consequently, when receiving the second data frame, the second STA cannot learn of the MAC address of the first STA, and consequently, cannot obtain the address information of the first STA in a TDLS discovery process.

To resolve this problem, when sending the TDLS discovery request frame, the first STA use, to carry the MAC address of the first STA, the first data frame that carries the TDLS discovery request frame. The MAC address of the first STA may be carried in a multi-link element in the first data frame.

Therefore, in this scenario, the first STA may use the multi-link element in the first radio frame to carry the first field, and the first field indicates that the multi-link element includes the MAC address information of the first STA, so that the second STA determines, based on the first field, that the multi-link element in the first radio frame carries the MAC address information of the first STA. Therefore, when the second STA needs to obtain the MAC address information of the first STA, the second STA may receive the MAC address information of the first STA based on the indication of the first field.

In some possible implementations, after learning of the MAC address information of the first STA, the second STA may further communicate with the first STA based on the MAC address information of the first STA and the TDLS.

Specifically, a communication process of step S201 and step S202 in FIG. 6a may be a communication process applied to the TDLS. Usually, it can be learned from the foregoing descriptions of the TDLS-based implementation process that the TDLS-based communication process is to set up a communication link between different STAs (located in a same BSS). The first STA is specifically a STA in a non-AP MLD (for example, the first MLD), and the second STA may be a single-link device, or may be a STA in another non-AP MLD (for example, the second MLD).

For example, a scenario shown in FIG. 6a may be applied to scenarios shown in FIG. 7a to FIG. 7d. For an association relationship between the first STA and the second STA, refer to an implementation process of "Implementation 1" shown in FIG. 5a.

In a possible implementation, if the second STA is a STA in an MLD, because the multi-link element in the first radio frame indicates a multi-link element in link information in the first MLD in which the first STA is located, after the second STA receives the first radio frame from the first STA in step S201, the second MLD in which the second STA is located may determine related link information based on the first radio frame, to implement TDLS-based communication between the first MLD and the second MLD.

Specifically, if the first MLD in which the first STA is located includes a STA that is located on a same link as the second STA, the second STA may communicate with the STA based on the first radio frame based on the TDLS. In addition, another STA in the second MLD in which the second STA is located may also communicate with the first MLD based on the TDLS. For ease of description, another STA different from the second STA in the second MLD in which the second STA is located may be denoted as a target STA. If a STA (denoted as an associated STA) that is located on a same link as the target STA exists in the first MLD, the target STA may determine link information of the associated STA in a plurality of manners, to implement TDLS-based communication between the target STA and the associated STA. For an information exchange process between a plurality of STAs (including the second STA and the target STA) included in the second MLD, refer to the descriptions of a scenario shown in FIG. 1.

In a possible implementation, (the processor in) the second STA determines the link information of the associated STA based on the multi-link element in the first radio frame, and sends the link information of the associated STA to the target STA.

In another possible implementation, after the second STA receives the first radio frame, the second STA sends the first radio frame (or the multi-link element in the first radio frame) to the target STA, so that (the processor in) the target STA determines the link information of the associated STA based on the first radio frame (or the multi-link element in the first radio frame).

In another possible implementation, after the second STA receives the first radio frame, the second MLD (the common processor in) determines the link information of the associated STA based on the first radio frame, and sends the link information of the associated STA to the target STA.

In the solution shown in FIG. 6a, when the first STA sends the first radio frame in step S201, the MAC address of the first STA may be located at different locations in the first radio frame. For example, the MAC address of the first STA is located in the multi-link element; or the MAC address of the first STA is located in another information element different from the multi-link element in the first radio frame.

The following provides descriptions in a plurality of implementations.

Implementation 1: The MAC address of the first STA is located in the multi-link element in the first radio frame.

In a possible implementation, the first multi-link element includes a common information field, and the MAC address information of the first STA is located in the common information field. Specifically, the MAC address information of the first STA is located in the common information field of the first multi-link element included in the first radio frame, so that the receiver of the first radio frame can determine the MAC address information of the first STA based on the common information field in step S202.

In a possible implementation, the first multi-link element includes a first field, and the first field indicates whether the first multi-link element includes the MAC address information of the first STA.

Optionally, when a value of the first field is a first value, the first field indicates that the first multi-link element includes the MAC address information of the first STA.

Optionally, when the value of the first field is a second value, the first field indicates that the first multi-link element does not include the MAC address information of the first STA.

Optionally, the first value is different from the second value.

For example, the first field may be implemented by using one or more bits. Herein, an implementation process of one bit is used as an example for description. In other words, a value corresponding to the first field may be "1" or "0".

For example, when the first value is "1" and the second value is "0", the first field indicates, by using the first value (that is, the value is " 1"), that the multi-link element includes the MAC address information of the first STA, and the first field indicates, by using the second value (that is, the value is "0"), that the multi-link element does not include the MAC address information of the first STA.

For another example, when the first value is "0" and the second value is "1", the first field indicates, by using the first value (that is, the value is "0"), that the multi-link element includes the MAC address information of the first STA, and the first field indicates, by using the second value (that is, the value is "1"), that the multi-link element does not include the MAC address information of the first STA.

In a possible implementation, the first field is located in a presence bitmap field in the first multi-link element. Specifically, the first field is located in the presence bitmap field in the multi-link element included in the first radio frame, so that the receiver of the first radio frame can determine the first field based on the presence bitmap field.

For example, a frame format in FIG. 4 is an implementation example of the multi-link element. In an optional implementation, the presence bitmap (Presence Bitmap) field may be specifically field k present (324) in FIG. 4, and one (or more) bits in the field k present (324) are used as the first field.

In a possible implementation, the first radio frame further includes a first information element, the first information element includes initiator address information and responder address information, and the initiator address information is a MAC address of the first MLD in which the first STA is located. Specifically, this solution may be applied to a TDLS-based transmission process. The first radio frame sent by the first STA may further include the first information element. The first information element includes at least initiator address information indicating a TDLS initiator (TDLS initiator) and responder address information indicating a TDLS responder (TDLS responder). The initiator address information is the MAC address of the first MLD in which the first STA is located, and indicates that the TDLS initiator is the first MLD in which the first STA is located.

Optionally, the first information element is a link identification information element (Link Identifier element). For a frame format of the link identification information element, refer to an implementation process shown in FIG. 2a.

In a possible implementation, in the first radio frame, the responder address information is MAC address information of the second STA or MAC address information of a second MLD in which the second STA is located.

Specifically, the solution may be applied to a TDLS-based transmission process. When the TDLS responder is a multi-link device, the responder address information in the first information element may be the MAC address information of the second MLD in which the second STA is located. When the TDLS responder is a single-link device, the responder address information in the first information element may be the MAC address information of the second STA. In this way, the solution can be applied to a plurality of different scenarios.

In a possible implementation, the solution may be applied to a TDLS-based transmission process, and an implementation of the second radio frame may also be similar to an implementation of the first radio frame. The second radio frame includes a second multi-link element corresponding to the second MLD in which the second STA is located, and the second multi-link element includes a MAC address of the second STA. Specifically, the solution may be applied to a TDLS-based transmission process. When the receiver of the first radio frame is a multi-link device, the second radio frame is used as a response frame of the first radio frame. The second radio frame may also include the second multi-link element corresponding to the second MLD in which the second STA is located. The second multi-link element includes the MAC address of the second STA. In this way, a receiver (for example, the first STA) of the second radio frame may determine the MAC address information of the second STA based on the second multi-link element, and subsequently, the receiver of the second radio frame communicates with the second STA based on the MAC address information of the second STA.

Optionally, the second multi-link element includes a common information field, and the MAC address information of the second STA is located in the common information field. Specifically, the MAC address information of the second STA is located in the common information field of the second multi-link element included in the second radio frame, so that the receiver of the second radio frame can determine the MAC address information of the second STA based on the common information field.

Optionally, the second multi-link element includes a second field, and the second field indicates whether the second multi-link element includes the MAC address information of the second STA.

Optionally, when a value of the second field is a first value, the second field indicates that the second multi-link element includes the MAC address information of the second STA.

Optionally, when the value of the second field is a second value, the second field indicates that the second multi-link element does not include the MAC address information of the second STA.

Optionally, the first value is different from the second value.

For example, the second field may be implemented by using one or more bits. Herein, an implementation process of one bit is used as an example for description. In other words, a value corresponding to the second field may be "1" or "0".

For example, when the first value is "0" and the second value is "1", the second field indicates, by using the first value (that is, the value is "1"), that the second multi-link element includes the MAC address information of the second STA, and the second field indicates, by using the second value (that is, the value is "0"), that the second multi-link element does not include the MAC address information of the second STA.

For another example, when the first value is "0" and the second value is "1", the second field indicates, by using the first value (that is, the value is "0"), that the second multi-link element includes the MAC address information of the second STA, and the second field indicates, by using the second value (that is, the value is "1"), that the second multi-link element does not include the MAC address information of the second STA.

In a first possible implementation, the second field is located in a presence bitmap field in the multi-link element. Specifically, the second field is located in the presence bitmap field of the second multi-link element included in the second radio frame, so that the receiver of the second radio frame can determine the second field based on the presence bitmap field.

For example, a frame format in FIG. 4 is an implementation example of the multi-link element. In an optional implementation, the presence bitmap (Presence Bitmap) field may be specifically field k present (324) in FIG. 4, and one (or more) bits in the field k present (324) are used as the first field.

In a possible implementation, the second radio frame further includes a second information element, and the second information element includes initiator address information and responder address information. Specifically, this solution may be applied to a TDLS-based transmission process. The second radio frame sent by the second STA may further include the second information element. The second information element includes at least initiator address information indicating a TDLS initiator (TDLS initiator) and responder address information indicating a TDLS responder (TDLS responder).

Optionally, the second information element is a link identification information element (Link Identifier element). For a frame format of the link identification information element, refer to an implementation process shown in FIG. 2a.

In a possible implementation, in the second information element, the initiator address information is any one of the following:

the MAC address of the first STA; or

the MAC address of the first MLD in which the first STA is located; or
a MAC address of a third STA, where both the third STA and the first STA are located in the first MLD, and a BSSID of a BSS in which the second STA is located is the same as a BSSID of a BSS in which the third STA is located.

Specifically, the solution may be applied to a TDLS-based transmission process, and the second radio frame sent by the second STA may further include the second information element. The second STA may indicate the initiator address information in the second information element in the foregoing plurality of implementations.

Herein, a scenario shown in FIG. 7c is used as an example for description. When the first STA is a STA 11, the second STA may be a STA 41 or a STA 42.

For example, when the second STA is the STA 41, because the STA 11 and the STA 41 are located on a same link (or the STA 11 and the STA 41 are associated with a same AP, that is, an AP 11), in the link identification information element in the second radio frame sent by the STA 41 serving as the second STA, the initiator address information may be set to the MAC address of the first STA, that is, a MAC address information of the STA 11 (or the initiator address information may be set to the MAC address of the first MLD in which the first STA is located, that is, MAC address information of a non-AP MLD 1). Because the STA 41 receives the multi-link element in the first radio frame, a non-AP MLD 2 in which the STA 41 is located may determine, based on the multi-link element, link information of the non-AP MLD 1 in which the STA 11 is located, so that a plurality of STAs (that is, the STA 41 and the STA 11, and the STA 42 and the STA 12) that are located in different non-AP MLDs and that are on a link in which the AP 11 is located may communicate based on the TDLS.

For another example, when the second STA is the STA 42, because a STA 22 and the STA 42 are located on a same link (or the STA 22 and the STA 42 are associated with a same AP, that is, an AP 12), in the link identification information element in the second radio frame sent by the STA 42 serving as the second STA, the initiator address information may be set to a MAC address of a third STA, that is, MAC address information of a STA 12 (or the initiator address information may be set to the MAC address of the first MLD in which the first STA is located, that is, MAC address information of the non-AP MLD 1). Because the STA 42 receives the multi-link element in the first radio frame, a non-AP MLD 2 in which the STA 42 is located may determine, based on the multi-link element, link information of a non-AP MLD 1 in which the STA 12 is located, so that a plurality of STAs (that is, the STA 42 and the STA 12, and the STA 41 and the STA 11) that are located in different non-AP MLDs and that are on a link in which the AP 11 is located may communicate based on the TDLS.

In a possible implementation, in the second information element, the responder address information is any one of the following:

the MAC address of the second STA; or
the MAC address of the second MLD in which the second STA is located.

Specifically, the solution may be applied to a TDLS-based transmission process, and the second radio frame sent by the second STA may further include the second information element. The second STA may indicate the responder address information in the second information element in the foregoing plurality of implementations.

Based on the technical solution shown in Implementation 1, in a transmission process that is of WLAN communication and that is applied to the TDLS, the first radio frame carries a multi-link element indicating station information of a first MLD in which the first STA is located, and the first multi-link element includes the MAC address information of the first STA. A receiver (for example, a second STA) of the first radio frame may obtain the MAC address information of the first STA based on the multi-link element. Therefore, the receiver of the first radio frame may receive the MAC address information of the first STA from a location at which the multi-link element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and a TDLS, to improve communication efficiency.

Implementation 2: The MAC address of the first STA is located in another information element different from the multi-link element in the first radio frame.

In a possible implementation, the first information element is a link identification information element (link identifier element), the link identification information element includes initiator address information and responder address information, the initiator address information is MAC address information of the first STA (or expressed as that the MAC address information of the first STA is located in the link identification information element), and the responder address information is address information of the second STA or address information of an MLD in which the second STA is located.

Specifically, the solution may be applied to a TDLS-based transmission process. The first information element included in the first radio frame sent by the first STA is the link identification information element, and the link identification information element includes at least initiator address information indicating a TDLS initiator (TDLS initiator) and responder address information indicating a TDLS responder (TDLS responder). The initiator address information is a MAC address of the first STA, and indicates that the TDLS initiator is the first STA.

In a possible implementation, the first radio frame further includes a link identification information element, the link identification information element includes initiator address information and responder address information, the initiator address information is MAC address information of the first MLD in which the first STA is located, and the responder address information is address information of a second STA or address information of an MLD in which the second STA is located.

Optionally, the first information element is different from the multi-link element, and the first information element is different from the link identification information element. In other words, the first information element is another information element different from the link identification information element and different from the multi-link element.

Specifically, the solution may be applied to a TDLS-based transmission process. In addition to the first information element and the multi-link element, the first radio frame sent by the first STA further includes the link identification information element. The link identification information element includes at least initiator address information indicating a TDLS initiator (TDLS initiator) and responder address information indicating a TDLS responder (TDLS responder). The initiator address information is the MAC address of the first MLD in which the first STA is located, and indicates that the TDLS initiator is the first MLD in which the first STA is located.

Optionally, for a frame format of the link identification information element, refer to an implementation process shown in FIG. 2a.

In a possible implementation, the second radio frame includes a second information element and a second multi-link element, and the second information element includes the MAC address information of the second station STA.

Specifically, the solution may be applied to a TDLS-based transmission process. When a receiver of the first radio frame is a multi-link device, the second radio frame is used as a response frame of the first radio frame. The second radio frame may also include a second multi-link element corresponding to a second MLD in which the second STA is located and the second information element, and the second information element includes a MAC address of the second STA. In this way, a receiver (for example, the first STA) of the second radio frame may determine the MAC address information of the second STA based on the second information element, and subsequently, the receiver of the second radio frame communicates with the second STA based on the MAC address information of the second STA.

In a possible implementation, the second information element is a link identification information element, the link identification information element includes initiator address information and responder address information, the initiator address information is the MAC address information of the second STA (or expressed as that the MAC address information of the second STA is located in the link identification information element), and the responder address information is address information of the second STA or address information of an MLD in which the second STA is located.

Specifically, the solution may be applied to a TDLS-based transmission process. The second information element included in the second radio frame sent by the second STA is the link identification information element, and the link identification information element includes at least initiator address information indicating a TDLS initiator (TDLS initiator) and responder address information indicating a TDLS responder (TDLS responder). The responder address information is a MAC address of the second STA, and indicates that the TDLS responder is the second STA.

In a possible implementation, the first radio frame further includes a link identification information element, the link identification information element includes initiator address information and responder address information, the initiator address information is MAC address information of the first MLD in which the first STA is located, and the responder address information is address information of a second STA or address information of an MLD in which the second STA is located.

Optionally, the second information element is different from the multi-link element, and the first information element is different from the link identification information element. In other words, the second information element is another information element different from the link identification information element and different from the multi-link element.

Specifically, the solution may be applied to a TDLS-based transmission process. In addition to the second information element and the multi-link element, the second radio frame sent by the second STA further includes the link identification information element. The link identification information element includes at least initiator address information indicating a TDLS initiator (TDLS initiator) and responder address information indicating a TDLS responder (TDLS responder). The initiator address information is the MAC address information of the first MLD in which the first STA is located, and indicates that the TDLS initiator is the first MLD in which the first STA is located.

Herein, a scenario shown in FIG. 7c is used as an example for description. When the first STA is a STA 11, the second STA may be a STA 41 or a STA 42.

For example, when the second STA is the STA 41, because the STA 11 and the STA 41 are located on a same link (or the STA 11 and the STA 41 are associated with a same AP, that is, an AP 11), in the link identification information element in the second radio frame sent by the STA 41 serving as the second STA, the initiator address information may be set to the MAC address of the first STA, that is, a MAC address information of the STA 11 (or the initiator address information may be set to the MAC address of the first MLD in which the first STA is located, that is, MAC address information of a non-AP MLD 1). Because the STA 41 receives the multi-link element in the first radio frame, a non-AP MLD 2 in which the STA 41 is located may determine, based on the multi-link element, link information of the non-AP MLD 1 in which the STA 11 is located, so that a plurality of STAs (that is, the STA 41 and the STA 11, and the STA 42 and the STA 12) that are located in different non-AP MLDs and that are on a link in which the AP 11 is located may communicate based on the TDLS.

For another example, when the second STA is the STA 42, because a STA 22 and the STA 42 are located on a same link (or the STA 22 and the STA 42 are associated with a same AP, that is, an AP 12), in the link identification information element in the second radio frame sent by the STA 42 serving as the second STA, the initiator address information may be set to a MAC address of a third STA, that is, MAC address information of a STA 12 (or the initiator address information may be set to the MAC address of the first MLD in which the first STA is located, that is, MAC address information of the non-AP MLD 1). Because the STA 42 receives the multi-link element in the first radio frame, a non-AP MLD 2 in which the STA 42 is located may determine, based on the multi-link element, link information of a non-AP MLD 1 in which the STA 12 is located, so that a plurality of STAs (that is, the STA 42 and the STA 12, and the STA 41 and the STA 11) that are located in different non-AP MLDs and that are on a link in which the AP 11 is located may communicate based on the TDLS.

Based on the technical solution shown in Implementation 2, in a transmission process that is of WLAN communication and that is applied to the TDLS, the first radio frame carries a multi-link element indicating station information of a first MLD in which the first STA is located, and the first information element different from the first multi-link element includes the MAC address information of the first STA. A receiver (for example, a second STA) of the first radio frame may obtain the MAC address information of the first STA based on the first information element. Therefore, the receiver of the first radio frame may receive the MAC address information of the first STA from a location at which the first information element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and a TDLS, to improve communication efficiency.

It can be learned from the foregoing descriptions that communication processes in FIG. 5a and FIG. 6a may be TDLS-based communication processes. There are a plurality of implementations of the first radio frame and the second radio frame in the communication processes in FIG. 5a and FIG. 6a in the TDLS-based communication process. For example, in the TDLS discovery process, the first radio frame is a TDLS discovery request frame, and the second radio frame is a TDLS discovery response frame. For another example, in a process corresponding to a TDLS setup request and response, the first radio frame is a TDLS setup request frame, and the second radio frame is a TDLS setup response frame. For another example, in a TDLS confirmation process, the first radio frame is a TDLS setup confirm frame, and the second radio frame is a first acknowledgment frame. For another example, in a TDLS data transmission process, the first radio frame is a TDLS data frame, and the second radio frame is a second acknowledgment frame.

In different implementation processes, the first STA may receive and send the first radio frame and the second radio frame on a communication link between the first STA and the second STA; or the first STA may receive and send the first radio frame and the second radio frame on a communication link between the first STA and the AP associated with the first STA. Correspondingly, there may be a plurality of different implementations of the first radio frame and the second radio frame on different communication links. The following separately provides descriptions.

In a first possible implementation, the first radio frame includes a TDLS discovery request frame, a TDLS setup request frame, or a TDLS setup confirm frame; and that the first STA (in step S 102 shown in FIG. 5a or step S201 shown in FIG. 6a) sends the first radio frame includes: The first STA sends the first radio frame to a first access point AP associated with the first STA. The first radio frame further includes an address 1 (Address 1, A1) field, an address 2 (Address 2, A2) field, and an address 3 (Address 3, A3) field. A value of the A1 field is address information of the first AP, a value of the A2 field is the address information of the first STA, and a value of the A3 field is the responder address information.

Specifically, the method shown in FIG. 5a or FIG. 6a may be applied to a plurality of TDLS-based transmission processes, for example, a TDLS discovery process and a TDLS setup process. The first radio frame specifically includes (or carries) a TDLS discovery request frame, a TDLS setup request frame, or a TDLS setup confirm frame. The first STA may send the first radio frame to the first AP associated with the first STA. The first radio frame further includes an A1 field indicating a receiver address (receiver address, RA) of the first radio frame, an A2 field indicating a transmitter address (transmitter address, TA) of the first radio frame, and an A3 field indicating a destination address (destination address, DA) of the first radio frame.

In a possible implementation, the first radio frame is a TDLS data frame; and that the first STA(in step S 102 shown in FIG. 5a or step S201 shown in FIG. 6a) sends the first radio frame includes: The first STA sends the first radio frame to the second STA. The first radio frame further includes an A1 field, an A2 field, and an A3 field. A value of the A1 field is the responder address information, a value of the A2 field is the address information of the first STA, and a value of the A3 field is a BSSID or a MAC address of an AP MLD.

Specifically, the method shown in FIG. 5a or FIG. 6a may be applied to a plurality of TDLS-based transmission processes, for example, a TDLS data transmission process. In other words, the first radio frame is a TDLS data frame. The first STA may specifically send the first radio frame to the second STA. The first radio frame further includes an A1 field indicating a RA of the first radio frame, an A2 field indicating a TA of the first radio frame, and an A3 field indicating a DA of the first radio frame.

In a possible implementation of any one of the first aspect to the twelfth aspect, the second radio frame is a TDLS setup response frame; and that the first STA (in step S103 shown in FIG. 5a or step S202 shown in FIG. 6a) receives the second radio frame includes: The first STA receives the second radio frame from the first AP associated with the first STA. The second radio frame includes an A1 field, an A2 field, and an A3 field. A value of the A1 field is the address information of the first STA, a value of the A2 field is address information of the first AP, and a value of the A3 field is the responder address information.

Specifically, the method shown in FIG. 5a or FIG. 6a may be applied to a plurality of TDLS-based transmission processes, for example, a TDLS setup process. The second radio frame is specifically a TDLS setup response frame. The first STA may receive the second radio frame sent by the first AP associated with the first STA. The second radio frame further includes an A1 field indicating a RA of the second radio frame, an A2 field indicating a TA of the second radio frame, and an A3 field indicating a DA of the second radio frame.

In a possible implementation, the second radio frame includes a TDLS discovery response frame, a response frame of the TDLS setup confirm frame, or a response frame of the TDLS data frame; and that the first STA (in step S103 shown in FIG. 5a or step S202 shown in FIG. 6a) receives the second radio frame includes: The first STA receives the second radio frame from the second STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

Specifically, the method shown in FIG. 5a or FIG. 6a may be applied to a plurality of TDLS-based transmission processes, for example, a TDLS discovery process, a TDLS setup process, and a TDLS data transmission process. The second radio frame specifically includes (or carries) the TDLS discovery response frame, the response frame of the TDLS setup confirm frame, or the response frame of the TDLS data frame. The first STA may receive the second radio frame sent by the second STA. The second radio frame further includes an A1 field indicating a RA of the second radio frame, an A2 field indicating a TA of the second radio frame, and an A3 field indicating a DA of the second radio frame.

In a possible implementation, the first radio frame includes a TDLS discovery request frame, a TDLS setup request frame, or a TDLS setup confirm frame; and that the second STA (in step S 102 shown in FIG. 5a or step S201 shown in FIG. 6a) receives the first radio frame includes: The second STA receives the first radio frame from a second AP associated with the second STA. The first radio frame further includes an A1 field, an A2 field, and an A3 field. A value of the A1 field is the address information of the second STA, a value of the A2 field is address information of the second AP, and a value of the A3 field is the initiator address information.

Specifically, the method shown in FIG. 5a or FIG. 6a may be applied to a plurality of TDLS-based transmission processes, for example, a TDLS discovery process and a TDLS setup process. The first radio frame specifically includes (or carries) a TDLS discovery request frame, a TDLS setup request frame, or a TDLS setup confirm frame. The second STA may receive the first radio frame sent by the second AP associated with the second STA. The first radio frame further includes an A1 field indicating a RA of the first radio frame, an A2 field indicating a TA of the first radio frame, and an A3 field indicating a DA of the first radio frame.

In a possible implementation, the first radio frame is a TDLS data frame; and that the second STA receives the first radio frame includes: The second STA (in step S 102 shown in FIG. 5a or step S201 shown in FIG. 6a) receives the first radio frame from the first STA. The first radio frame further includes an A1 field, an A2 field, and an A3 field. A value of the A1 field is the address information of the second STA, a value of the A2 field is the initiator address information, and a value of the A3 field is a BSSID or MAC address information of an AP MLD.

Specifically, the method shown in FIG. 5a or FIG. 6a may be applied to a plurality of TDLS-based transmission processes, for example, a TDLS data transmission process. In other words, the first radio frame is a TDLS data frame. The second STA may specifically receive the first radio frame sent by the first STA. The first radio frame further includes an A1 field indicating a RA of the first radio frame, an A2 field indicating a TA of the first radio frame, and an A3 field indicating a DA of the first radio frame.

In a possible implementation, the second radio frame is a TDLS setup response frame, and that the second STA (in step S103 shown in FIG. 5a or step S202 shown in FIG. 6a) sends the second radio frame includes: The first STA sends the second radio frame to a second AP associated with the second STA. The second radio frame includes an A1 field, an A2 field, and an A3 field. A value of the A1 field is address information of the second AP, a value of the A2 field is the address information of the second STA, and a value of the A3 field is the initiator address information.

Specifically, the method shown in FIG. 5a or FIG. 6a may be applied to a plurality of TDLS-based transmission processes, for example, a TDLS setup process. The second radio frame is specifically a TDLS setup response frame. The second STA may specifically send the second radio frame to the second AP associated with the second STA. The second radio frame further includes an A1 field indicating a RA of the second radio frame, an A2 field indicating a TA of the second radio frame, and an A3 field indicating a DA of the second radio frame.

In a possible implementation, the second radio frame includes a TDLS discovery response frame, a response frame of the TDLS setup confirm frame, or a response frame of the TDLS data frame; and that the second STA (in step S 103 shown in FIG. 5a or step S202 shown in FIG. 6a) sends the second radio frame includes: The second STA sends the second radio frame to the first STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

Specifically, the method shown in FIG. 5a or FIG. 6a may be applied to a plurality of TDLS-based transmission processes, for example, a TDLS discovery process, a TDLS setup process, and a TDLS data transmission process. The second radio frame specifically includes (or carries) the TDLS discovery response frame, the response frame of the TDLS setup confirm frame, or the response frame of the TDLS data frame. The second STA may specifically send the second radio frame to the second STA associated with the second STA. The second radio frame further includes an A1 field indicating a RA of the second radio frame, an A2 field indicating a TA of the second radio frame, and an A3 field indicating a DA of the second radio frame.

In a possible implementation, the responder is the second STA or the second MLD in which the second STA is located. Specifically, in a plurality of transmission processes applied to the TDLS, a responder indicated by the responder address information included in the first radio frame (or the second radio frame) may be the second STA or the second MLD in which the second STA is located. In other words, a responder in a TDLS communication link may be the second STA or the second MLD in which the second STA is located.

In a possible implementation, the initiator is the first STA or the first MLD in which the first STA is located. Specifically, in a plurality of transmission processes applied to the TDLS, an initiator indicated by the initiator address information included in the first radio frame (or the second radio frame) may be the first STA or the first MLD in which the first STA is located. In other words, a responder in a TDLS communication link may be the first STA or the first MLD in which the first STA is located.

The following describes the TDLS-based communication processes in FIG. 5a and FIG. 6a by using an implementation example shown in FIG. 6b.

FIG. 6b shows another embodiment of a communication method according to this application.

In an implementation, when the TDLS-based communication processes in FIG. 5a and FIG. 6a are TDLS discovery processes, the communication process may be represented as step S301 and step S302 shown in FIG. 6b. Specifically, the following implementation process is included:

S301: An initiator sends a TDLS discovery request frame. Correspondingly, a responder receives the TDLS discovery request frame in step S301. The TDLS discovery request frame is a first radio frame in the TDLS-based communication processes in FIG. 5a and FIG. 6a.

S302: The responder sends a TDLS discovery response frame. Correspondingly, the initiator receives the TDLS discovery response frame in step S302. The TDLS discovery response frame is a second radio frame in the TDLS-based communication processes in FIG. 5a and FIG. 6a.

Specifically, because the TDLS discovery process is a process in which the initiator determines responder related information (including capability information and a supported related function), and an MLD includes station information of a plurality of links, information discovery of a station of a plurality of links between MLDs needs to be completed in a TDLS discovery process of the MLD.

For example, a TDLS discovery request frame that carries MLD information may be sent by a first STA on a first link, and the TDLS discovery request frame carries a multi-link element to carry information about a second STA on a second link. There may be one or more second links, and there may be one or more corresponding second STAs. FIG. 7c is used as an implementation example. A communication link associated with a STA 11 and an AP 11 (and a STA 41 and the AP 11) may be referred to as the first link, and a communication link associated with a STA 12 and an AP 12 (and a STA 42 and the AP 12) may be referred to as the second link.

Because the TDLS discovery request frame is sent by the first STA, the first STA may be referred to as a transmitting station (transmitting STA) or a reporting station (reporting STA), and the corresponding first link may be referred to as a transmitting link (transmitting link) or a reporting link (reporting link).

The TDLS discovery process of the MLD is as follows:

In step S301, the first STA serves as an initiator, and the first STA generates a TDLS discovery request frame. The discovery request frame carries a multi-link element and a link identifier element. The first STA is affiliated with (affiliated with) the first MLD. In other words, the first MLD is an initiator MLD (initiator MLD). Usually, an MLE carries information about the first MLD (including information about another link different from the first link in the first MLD), and the link identifier element may identify the initiator MLD and a responder MLD.

For example, the TDLS discovery request frame includes fields shown in Table 3.

**Table 3**

| Order (Order) | Information (Information) |
|---|---|
| 1 | Category (Category) |
| 2 | TDLS action (TDLS Action) |
| 3 | Dialog token (Dialog Token) |
| 4 | Link identifier (Link Identifier) |
| 5 | Multi-band (Multi-band) (optional, optional) |
| 6 | Multi-link (Multi-Link) |

The TDLS discovery request frame is carried in a data frame for sending. Specifically, the TDLS discovery request frame is sent by the first STA to the associated first AP by using the first data frame, and then sent by the first AP associated with the first STA to the second STA by using the second data frame. The second STA is affiliated with the second MLD, and the second STA may operate on a link the same as that of the first STA, or may operate on a link different from that of the first STA (because the AP may select different links for forwarding). The second MLD may be the responder MLD (responder MLD).

For example, a frame structure of a data frame that carries the TDLS discovery request frame is shown in FIG. 2b. The following information is included:

Frame control (Frame Control), Duration (Duration), Address 1 (Address 1), Address 2 (Address 2), Address 3 (Address 3), Sequence control (Sequence Control), Address 4 (Address 4), Quality of service control (quality of service control, QoS Control), High throughput control (high throughput control, HT Control), Frame body (Frame Body), and Frame check sequence (frame check sequence, FCS).

Address 1 indicates a receiver address (RA, receiver address), Address 2 indicates a transmitter address (TA, transmitter address), and Address 3 depends on values of To DS and From DS fields in Frame Control.

When the data frame (when a transmitter is a STA and a receiver is an AP) is an uplink data frame, the Address 3 field indicates a destination address (destination address, DA).

When the data frame (when the transmitter is an AP and the receiver is a STA) is a downlink data frame, the Address 3 field indicates a source address (source address, SA).

Before an MLD TDLS discovery process, the initiator obtains a responder MAC address based on an ARP protocol or a proxy ARP protocol. If the responder is an MLD, the initiator obtains an MLD MAC address of the responder, and sets a destination address field (DA) of the first data frame to the MLD MAC address of the responder. After receiving the first data frame, the AP forwards the first data frame. That is, the second data frame is generated and sent to a second STA. Because the initiator is also an MLD, the AP sets a source address field (SA) of the second data frame to an MLD MAC address of the initiator.

Optionally, for a frame structure of the link identification information element in the TDLS discovery request frame, refer to the implementation process shown in FIG. 2a.

In the TDLS discovery request frame, a value of a TDLS initiator STA address field in the link identification information element may be an MLD MAC address of the first MLD. Such a setting is to keep a value of a SA of a second data frame to be consistent with the MLD MAC address of the first MLD, so that when the second STA receives the second data frame, the second STA can obtain consistent initiator addresses based on the SA or based on the TDLS initiator STA address, to avoid confusion.

Specifically, the TDLS discovery request frame is encapsulated in a first data frame sent by the first STA to an AP associated with the first STA. For a frame format of the first data frame, refer to FIG. 5b. Compared with FIG. 2b, FIG. 5b describes in detail information included in a "frame body (Frame Body)". The TDLS discovery request frame may be specifically carried in the "frame body (Frame Body)". As shown in FIG. b, the "frame body (Frame Body)" includes the following information:

a category (Category), a TDLS action (TDLS Action), a dialog token (Dialog Token), a link identification information element (Link Identifier), and a multi-link element (Multi-Link element).

In the first data frame, an address 1 of the first data frame is a MAC address of an AP, an address 2 is an address of the first STA, and an address 3 is an MLD MAC address of the second MLD.

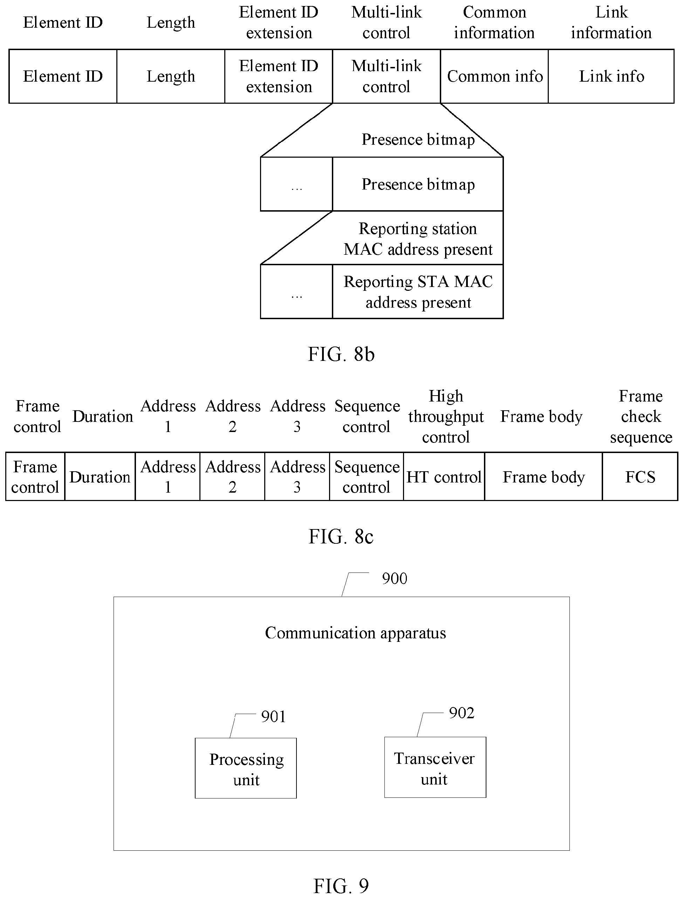

Then, when the TDLS discovery request frame is forwarded by the AP, the TDLS discovery request frame is carried in the second data frame for sending (for a frame format of the second data frame, refer to FIG. 8b). In the second data frame, an address 1 of the second data frame is a MAC address of the second STA, an address 2 is a MAC address of an AP (it is noted that because the MAC address may be forwarded on another link, the address may be different from the MAC address of the AP in the first data frame), and an address 3 is the MLD MAC address of the first MLD. Consequently, when receiving the second data frame, the second STA cannot learn of the MAC address of the first STA, and consequently, cannot obtain complete information of the first MLD in a TDLS discovery process.

To resolve this problem, when sending the TDLS discovery request frame, the first STA use, to carry the MAC address of the first STA, the first data frame that carries the TDLS discovery request frame. The MAC address of the first STA may be carried in the first data frame in a plurality of manners. For example, the MAC address of the first STA may be carried in the multi-link element in the first data frame (for example, Implementation 1 shown in FIG. 5a or FIG. 6a). For another example, the MAC address of the first STA may be carried in another information element different from the multi-link element in the first data frame (for example, Implementation 2 shown in FIG. 6a).

In an implementation, as shown in Implementation 1 in FIG. 5a or FIG. 6a, the MAC address of the first STA may be carried in the multi-link element in the first data frame.

Specifically, the multi-link element carries the MAC address information of the first STA. Specifically, as shown in FIG. 8a, the MAC address information of the first STA may be carried in the Common Info field of the multi-link element.

Optionally, the MAC address information of the first STA may be carried in a reporting station address information (Reporting STA Address) field in FIG. 8a. A name of the field may alternatively be another name, for example, transmitting STA address (transmitting STAAddress), or another name. This is not limited herein.

In addition, the multi-link element sometimes does not need to carry the reporting STA address field. Therefore, indication information (for example, the indication information is the first field in any one of the foregoing embodiments) may be carried in multi-link control, to indicate whether the reporting STA address field (the MAC address information of the first STA) exists.

For example, as shown in FIG. 8b, the indication information may be located in a presence bitmap field.

Optionally, the indication information may be carried in reporting STA MAC address present (Reporting STA MAC Address Present) in the presence bitmap field in FIG. 8b. A name of the field may alternatively be another name, for example, transmitting STA MAC address present (transmitting STA MAC Address Present), or another name. This is not limited herein.

Optionally, the multi-link element in the first data frame may be a basic variant (Basic variant) multi-link element. In other words, a value of a Type field in the multi-link control field in the multi-link element is 0.

Alternatively, the multi-link element may be a TDLS variant (TDLS variant) multi-link element. In other words, a value of a type field in the multi-link control field in the multi-link element is another value different from 0 and 1.

In the foregoing implementations, as a receiver of the TDLS discovery request frame, after the responder receives the TDLS discovery request frame in step S301, the responder sends a TDLS discovery response frame in step S302.

Optionally, the responder may be a single-link device, or may be another STA in the second MLD.

Optionally, the responder may be a STA on a first link in the second MLD, and the first link is determined based on a BSSID field in a link identification information element in the TDLS discovery request frame.

Optionally, when no STA in the second MLD operates on the first link, another STA may also serve as a responder, to return the TDLS discovery response frame to the first STA.

Specifically, a value of an address 1 field of the TDLS discovery response frame sent by the responder is a value of an address of the first STA in the TDLS discovery request frame. For example, the value of the Address 1 field is equal to a value of a reporting STA MAC address field.

For example, the TDLS discovery response frame is a management frame. In other words, a third STA can send the TDLS discovery response frame to the first STA without forwarding performed by an AP. A frame structure of the TDLS discovery response frame is shown in FIG. 8c. Compared with the frame structure shown in FIG. 2b, some information may be omitted in FIG. 8c. For example, the following information is omitted:

an address 4 (Address 4) and quality of service control (quality of service control, QoS Control).

In another implementation, as shown in Implementation 2 in FIG. 6a, the MAC address of the first STA may be carried in another information element different from the multi-link element in the first data frame.

For example, the TDLS discovery request frame carries the MAC address information of the first STA, and the TDLS discovery request frame shown in Table 3 may be represented as Table 4.

**Table 4**

| Order | Information |
|---|---|
| 1 | Category |
| 2 | TDLS action |
| 3 | Dialog token |

(continued)

| Order | Information |
|---|---|
| 4 | Link identifier |
| 5 | Multi-band (optional, optional) |
| 6 | Reporting STA MAC address |
| 7 | Multi-link |

In the implementation shown in Table 4, the MAC address (for example, represented as the reporting STA MAC address) of the first STA is located in another information element that is in the TDLS discovery request frame and that is different from the link identification information element (that is, "link identifier") and the multi-link element (that is, "Multi-Link").

For another example, the MAC address (for example, represented as the reporting STA MAC address) of the first STA is located in the link identification information element in the TDLS discovery request frame.

In the foregoing implementations, as a receiver of the TDLS discovery request frame, after the responder receives the TDLS discovery request frame in step S301, the responder sends a TDLS discovery response frame in step S302.

Optionally, the responder may be a single-link device, or may be another STA in the second MLD.

Optionally, the responder may be a STA on a first link in the second MLD, and the first link is determined based on a BSSID field in a link identification information element in the TDLS discovery request frame.

Optionally, when no STA in the second MLD operates on the first link, another STA may also serve as a responder, to return the TDLS discovery response frame to the first STA.

Specifically, a value of an address 1 field of the TDLS discovery response frame sent by the responder is a value of an address of the first STA in the TDLS discovery request frame. For example, the value of the Address 1 field is equal to a value of a reporting STA MAC address field.

For example, the TDLS discovery response frame is a management frame. In other words, a third STA can send the TDLS discovery response frame to the first STA without forwarding performed by an AP. A frame structure of the TDLS discovery response frame is shown in FIG. 8c. Compared with the frame structure shown in FIG. 2b, some information may be omitted in FIG. 8c. For example, the following information is omitted:
an address 4 (Address 4) and quality of service control (quality of service control, QoS Control).

In addition, a STA (denoted as a STA 2) in the second MLD receives the TDLS discovery request frame. If the STA finds that a value of the TDLS responder STA MAC address field in the multi-link identification information element in the TDLS discovery request frame is an MLD MAC address of an MLD (the second MLD) in which the STA 2 is located, the STA determines that the STA is the receiver of the TDLS discovery request frame, and needs to return the TDLS discovery response frame.

Optionally, the TDLS discovery response frame may be sent on the first link, or may be sent on another link. The second MLD may determine, based on the multi-link element in the TDLS discovery request frame, a link supported by the first MLD and a MAC address of a STA on a corresponding link, to determine how to set the A1 field when the TDLS discovery response frame is returned. The A1 field needs to be set to the MAC address of the STA on the corresponding link in the MLD 1.

For example, the TDLS discovery response frame also needs to include the multi-link element and the link identification information element.

Optionally, if the responder returns a TDLS discovery response based on another link different from the first link in step S302, the TDLS initiator STA MAC address field in the link identification information element is set to a MAC address of a new link, or is set to an MLD MAC address.

Optionally, the TDLS responder STA MAC address field of the link identification information element is set to the MLD MAC address.

Then, in step S302, if the first MLD finds that a value of a TDLS responder STA MAC address field in LIE in the TDLS discovery response frame is the same as a value of a TDLS responder STA MAC address field in LIE in the sent TDLS discovery request frame, the first MLD determines that the TDLS response frame needs to be received. It should be noted that, because the TDLS discovery response returned across a link, a BSSID in the link identification information element may change, so that the TDLS initiator STA MAC address also changes, and becomes an address of a station on a new link.

In another implementation, when the TDLS-based communication processes in FIG. 5a and FIG. 6a are processes corresponding to a TDLS setup request and response, the communication process may be represented as step S303 and step S304 shown in FIG. 6b. Specifically, the following implementation process is included:

S303: The initiator sends a TDLS setup request frame. Correspondingly, the responder receives the TDLS setup request frame in step S303. The TDLS setup request frame is a first radio frame in the TDLS-based communication processes in FIG. 5a and FIG. 6a.

S304: The responder sends a TDLS setup response frame. Correspondingly, the initiator receives the TDLS setup response frame in step S304. The TDLS setup response frame is a second radio frame in the TDLS-based communication processes in FIG. 5a and FIG. 6a.

Optionally, similar to a receiving and sending process of the TDLS discovery request frame in step S301, because the TDLS setup request frame and the setup confirm frame may be received by a peer end on another link after being forwarded by the AP, the TDLS setup request frame and the setup confirm frame need to carry the multi-link element and the link identification information element.

In a possible implementation, the initiator needs to use, to carry the multi-link element and the link identification information element, the TDLS setup request frame sent in step S303. A value of the TDLS initiator STA MAC address field (that is, initiator address information) in the link identification information element may be a MAC address of a transmitting station, a BSSID is a BSSID corresponding to a transmitting link, and a value of a TDLS responder STA MAC address (that is, responder address information) may be a MAC address of a STA on a corresponding link in an MLD in which the responder is located, or may be an MLD MAC address of an MLD in which the responder is located.

In addition, in a process in which the MLD in which the responder is located receives the TDLS setup request frame in step S303, if the MLD finds that the TDLS responder STA MAC address in the link identification information element in the TDLS setup request frame is a MAC address of a STA on any link in the MLD in which the responder is located, or the MLD MAC address of the MLD 2, the TDLS setup response frame is returned.

In a possible implementation, the responder needs use, to carry the multi-link element and the link identification information element, the TDLS setup response frame sent in step S304. The TDLS initiator STA MAC address (that is, initiator address information) in the link identification information element is set to an MLD MAC address of an MLD in which the initiator is located, the TDLS responder STA MAC address (that is, responder address information) is set to a MAC address of a STA that sends the frame in the MLD in which the responder is located, and a BSSID is set to a BSSID of a link on which the frame is sent.

In addition, after the MLD in which the initiator is located receives the TDLS setup response frame, if the MLD in which the initiator is located finds that the value of the TDLS initiator STA MAC address field in the link identification information element in the TDLS setup response frame is an MLD MAC address of the MLD 1, it is determined that the TDLS response frame needs to be received.

In another implementation, when the TDLS-based communication processes in FIG. 5a and FIG. 6a are processes corresponding to a TDLS setup acknowledgment, the communication process may be represented as step S305 and step S306 shown in FIG. 6b. Specifically, the following implementation process is included:

S305: The initiator sends a TDLS confirm frame. Correspondingly, the responder receives the TDLS confirm frame in step S305.

The TDLS confirm frame is the first radio frame in the TDLS-based communication processes in FIG. 5a and FIG. 6a.

S306: The responder sends a first acknowledgment frame. Correspondingly, the initiator receives the first acknowledgment frame in step S306. The first acknowledgment frame is a response frame of the TDLS confirm frame.

The first acknowledgment frame is a second radio frame in the TDLS-based communication processes in FIG. 5a and FIG. 6a.

Optionally, the first acknowledgment frame (or a second response frame) may be an acknowledgment (acknowledge, ACK) frame.

In another implementation, when the TDLS-based communication processes in FIG. 5a and FIG. 6a are TDLS data transmission processes, the communication process may be represented as step S307 and step S308 shown in FIG. 6b. Specifically, the following implementation process is included:

S307: The initiator sends a TDLS data frame. Correspondingly, the responder receives the TDLS data frame in step S307.

The TDLS data frame is the first radio frame in the TDLS-based communication processes in FIG. 5a and FIG. 6a.

S308: The responder sends a second acknowledgment frame. Correspondingly, the initiator receives the second acknowledgment frame in step S308. The second acknowledgment frame is a response frame of the TDLS data frame.

The second acknowledgment frame is a second radio frame in the TDLS-based communication processes in FIG. 5a and FIG. 6a.

Optionally, the second acknowledgment frame may be a block acknowledgment (block acknowledge, Block ACK, BA for short) frame or an acknowledgment (acknowledge, ACK) frame.

Specifically, for implementation processes of step S303 to step S308, refer to the implementation processes of step S301 and step S302. Details are not described herein again.

Optionally, any radio frame in the TDLS setup request frame transmitted in step S303, the TDLS setup response frame transmitted in step S304, and the TDLS setup confirm frame transmitted in step S305 may further carry a TPK handshake message. The TPK handshake message carries a parameter required for generating a TPK, and the parameter includes at least one of a first BSSID, a second BSSID, and a transmitted BSSID.

Optionally, the TPK satisfies the following formula:

$$TPK = KDF\text{-}Hash\text{-}Length(A)$$

A parameter A satisfies the following formula:

$$(TPK\text{-}Key\text{-}Input, "TDLS\ PMK", min(MAC\_I, MAC\_R) || max(MAC\_I, MAC\_R) || BSSID)$$

Herein, TPK-Key-Input=Hash(min (SNonce, ANonce)‖max(SNonce, ANonce)).

In addition, a related parameter satisfies the following content:

"ANonce" is an authenticator nonce and " SNonce " is a supplicant nonce, and "ANonce" and "SNonce" each are included in an FTE information element; "MAC_I" represents initiator MAC address information; "MAC R" represents responder MAC address information; and "BSSID" represents a BSSID corresponding to the initiator (or an MLD MAC address of an AP MLD).
"KDF-Hash-Length" indicates a key generation function. For details, refer to the standard document 802.11-2020.
" min(MAC_I, MAC_R)" indicates to obtain a minimum value in MAC_I and MAC_R.
" max(MAC_I, MAC_R) " indicates to obtain a maximum value in MAC_I and MAC_R.
"min(SNonce, ANonce)" indicates to obtain a minimum value in Nonce and ANonce.
"max(SNonce, ANonce)" indicates to obtain a minimum value in Nonce and ANonce.
"Hash(min (SNonce, ANonce)‖max (SNonce, ANonce))" indicates a hash algorithm in an authentication and key management suite.
"TDLS PMK" indicates that a KDF operation is to generate a TDLS PMK.
"‖" represents "or".

Optionally, in step S307 and step S308, after the TDLS direct link is set up, the initiator and the responder may perform data transmission. When sending a data frame, the initiator or the responder may set an A1 field of the data frame to an MLD MAC address of the peer party, and set an A2 field to an MLD MAC address of the initiator or the responder.

Optionally, if the responder receives the data frame and finds that a value of the A1 field of the data frame is a value of an MLD MAC address of the responder, the responder continues to receive the data frame.

The foregoing describes this application from a perspective of the method. The following further describes this application from a perspective of an apparatus.

FIG. 9 shows a communication apparatus 900 according to this application. For example, the communication apparatus 900 may be specifically a transmitter or a receiver in the communication method (and any possible implementation of the communication method) in FIG. 5a.

As shown in FIG. 9, the communication apparatus 900 includes a processing unit 901 and a transceiver unit 902.

When the communication apparatus 900 is configured to execute the communication process related to the transmitter, the processing unit 901 and the transceiver unit 902 are specifically configured to execute the following process.

The processing unit 901 is configured to generate a first radio frame. The first radio frame includes a multi-link element, the multi-link element includes a first field, and the first field indicates whether the multi-link element includes MAC address information of a first STA.

The transceiver unit 902 is configured to send the first radio frame.

Based on the technical solution, in a WLAN communication process, the first radio frame sent by a sending unit 901 carries a multi-link element indicating station information of an MLD in which the first STA is located, and the multi-link element includes the first field indicating whether the multi-link element includes the MAC address information of the first STA. When the first field indicates that the multi-link element includes the MAC address information of the first STA, a receiver (for example, a second STA) of the first radio frame may determine, based on the first field, that the MAC address information of the first STA is located in the multi-link element. Therefore, the first field indicating whether the multi-link element includes the MAC address information of the first STA is set in the first radio frame, so that address information of the transmitter is indicated more flexibly, to adapt to a plurality of communication scenarios. Correspondingly, the receiver of the first radio frame flexibly chooses, based on the first field in the first radio frame, whether to receive the MAC address information of the first STAin the multi-link element, and may accurately learn of the MAC address information of the first STA when the first field indicates that the multi-link element includes the MAC address information of the first STA.

When the communication apparatus 900 is configured to execute the communication process related to the receiver, the processing unit 901 and the transceiver unit 902 are specifically configured to execute the following process.

The transceiver unit 902 is configured to receive a first radio frame from a first STA. The first radio frame includes a multi-link element, the multi-link element includes a first field, and the first field indicates whether the multi-link element includes MAC address information of the first STA.

The processing unit 901 is configured to determine, based on the first field, whether to receive the MAC address information of the first STA in the multi-link element.

Based on the technical solution, in a WLAN communication process, the first radio frame received by a receiving unit 902 carries a multi-link element indicating station information of an MLD in which the first STA is located, and the multi-link element includes the first field indicating whether the multi-link element includes the MAC address information of the first STA. When the first field indicates that the multi-link element includes the MAC address information of the first STA, a receiver (for example, a second STA) of the first radio frame may determine, based on the first field, that the MAC address information of the first STA is located in the multi-link element. Therefore, the first field indicating whether the multi-link element includes the MAC address information of the first STA is set in the first radio frame, so that address information of the transmitter is indicated more flexibly, to adapt to a plurality of communication scenarios. Correspondingly, the receiver of the first radio frame flexibly chooses, based on the first field in the first radio frame, whether to receive the MAC address information of the first STAin the multi-link element, and may accurately learn of the MAC address information of the first STA when the first field indicates that the multi-link element includes the MAC address information of the first STA.

When the communication apparatus 900 is configured to execute the communication process related to the transmitter (or the receiver), the communication apparatus 900 may further perform the following possible implementations.

In a possible implementation, the first field is located in a presence bitmap (Presence Bitmap) field in the multi-link element.

In a possible implementation, when a value of the first field is a first value, the first field indicates that the multi-link element includes the MAC address information of the first STA, and the multi-link element includes the MAC address information of the first STA.

Optionally, when the value of the first field is a second value, the first field indicates that the multi-link element does not include the MAC address information of the first STA.

Optionally, the first value is different from the second value.

In a possible implementation, when the first field indicates that the multi-link element includes the MAC address information of the first STA, the multi-link element includes a common information (Common Info) field, and the MAC address information of the first STA is located in the common information field.

Optionally, when the first field indicates that the multi-link element includes the MAC address information of the first STA, the first radio frame includes any one of the following:

a tunneled direct link setup (tunneled direct link setup, TDLS) discovery request frame, a TDLS discovery response frame, a TDLS setup request frame, a TDLS setup response frame, a TDLS setup confirm frame, a response frame of the TDLS setup confirm frame, a TDLS data frame, and a response frame of the TDLS data frame.

In a possible implementation, when the first field indicates that the multi-link element does not include the MAC address information of the first STA, the first radio frame further includes a first information element, the first information element includes the MAC address information of the first STA, and the first information element is different from the multi-link element.

Optionally, when the first field indicates that the multi-link element does not include the MAC address information of the first STA, the first radio frame includes any one of the following:

an association request frame, a reassociation request frame, an association response frame, a reassociation response frame, or a probe response frame.

It should be noted that the communication apparatus 900 may be further configured to perform the foregoing other embodiments and achieve corresponding beneficial effects. For details, refer to the descriptions in the foregoing embodiments. Details are not described herein again.

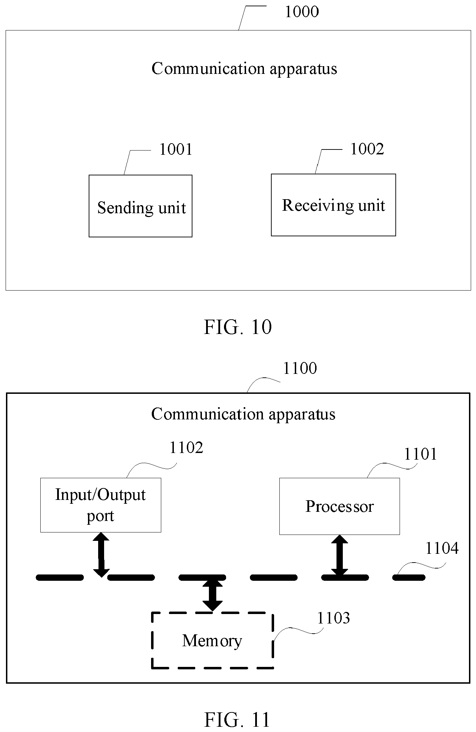

FIG. 10 shows a communication apparatus 1000 according to this application. The communication apparatus 1000 includes a sending unit 1001 and a receiving unit 1002.

In an implementation, the communication apparatus 1000 may be specifically a first STA or a second STA in the communication method (any possible implementation of the communication method) in FIG. 6a.

When the communication apparatus 1000 is configured to execute the communication process related to the first STA (or an initiator), the sending unit 1001 and the receiving unit 1002 are specifically configured to execute the following process.

The sending unit 1001 is configured to send a first radio frame. The first radio frame includes a first multi-link element corresponding to a first multi-link device MLD in which a first STAis located, and the first multi-link element includes MAC address information of the first STA.

The receiving unit 1002 is configured to receive a second radio frame. The second radio frame is a response frame of the first radio frame.

Based on the technical solution, in a transmission process that is of WLAN communication and that is applied to the TDLS, the first radio frame sent by the sending unit 1001 carries a multi-link element indicating station information of a first MLD in which the first STA is located, and the first multi-link element includes the MAC address information of the first STA. A receiver (for example, a second STA) of the first radio frame may obtain the MAC address information of the first STA based on the multi-link element. Therefore, the receiver of the first radio frame may receive the MAC address information of the first STA from a location at which the multi-link element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and the TDLS, to improve communication efficiency.

When the communication apparatus 1000 is configured to execute the communication process related to the second STA (or a responder), the sending unit 1001 and the receiving unit 1002 are specifically configured to execute the following process.

The receiving unit 1002 is configured to receive a first radio frame. The first radio frame includes a first multi-link element corresponding to a first multi-link device MLD in which a first STA is located, and the first multi-link element includes medium access control MAC address information of the first STA.

The sending unit 1001 is configured to send a second radio frame. The second radio frame is a response frame of the first radio frame.

Based on the technical solution, in a transmission process that is of WLAN communication and that is applied to the TDLS, the first radio frame received by the receiving unit 1002 carries a multi-link element indicating station information of a first MLD in which the first STA is located, and the first multi-link element includes the MAC address information of the first STA. A receiver (for example, a second STA) of the first radio frame may obtain the MAC address information of the first STA based on the multi-link element. Therefore, the receiver of the first radio frame may receive the MAC address information of the first STA from a location at which the multi-link element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and a TDLS, to improve communication efficiency.

When the communication apparatus 1000 is configured to execute the communication process related to the first STA (or the second STA, or the initiator, or the responder), the communication apparatus 1000 may further perform the following possible implementations.

In a possible implementation, the first multi-link element includes a common information field, and the MAC address information of the first STA is located in the common information field.

In a possible implementation, the first multi-link element includes a first field, and the first field indicates whether the first multi-link element includes the MAC address information of the first STA.

Optionally, when a value of the first field is a first value, the first field indicates that the first multi-link element includes the MAC address information of the first STA.

Optionally, when the value of the first field is a second value, the first field indicates that the first multi-link element does not include the MAC address information of the first STA.

Optionally, the first value is different from the second value.

In a possible implementation, the first field is located in a presence bitmap field in the first multi-link element.

In a possible implementation, the first radio frame further includes a first information element, the first information element includes initiator address information and responder address information, and the initiator address information is a MAC address of the first MLD in which the first STA is located.

Optionally, the first information element is a link identification information element (Link Identifier element).

In a possible implementation, in the first radio frame, the responder address information is MAC address information of the second STA or MAC address information of a second MLD in which the second STA is located.

In a possible implementation, the second radio frame includes a second multi-link element corresponding to the second MLD in which the second STA is located, and the second multi-link element includes a MAC address of the second STA.

In a possible implementation, the second multi-link element includes a common information field, and the MAC address information of the second STA is located in the common information field.

In a possible implementation, the second multi-link element includes a second field, and the second field indicates whether the second multi-link element includes the MAC address information of the second STA.

Optionally, when a value of the second field is a first value, the second field indicates that the second multi-link element includes the MAC address information of the second STA.

Optionally, when the value of the second field is a second value, the second field indicates that the second multi-link element does not include the MAC address information of the second STA.

Optionally, the first value is different from the second value.

In a possible implementation, the second field is located in a presence bitmap field in the multi-link element.

In a possible implementation, the second radio frame further includes a second information element, and the second information element includes initiator address information and responder address information.

Optionally, the second information element is a link identification information element (Link Identifier element).

In a possible implementation, in the second information element, the initiator address information is any one of the following:

the MAC address of the first STA; or
the MAC address of the first MLD in which the first STA is located; or
a MAC address of a third STA, where both the third STA and the first STA are located in the first MLD, and a BSSID of a BSS in which the second STA is located is the same as a BSSID of a BSS in which the third STA is located.

In a possible implementation, in the second information element, the responder address information is any one of the following:

the MAC address of the second STA; or
the MAC address of the second MLD in which the second STA is located.

In a possible implementation, the first radio frame includes a TDLS discovery request frame, a TDLS setup request frame, or a TDLS setup confirm frame; and that the first STA sends the first radio frame includes: The first STA sends the first radio frame to a first access point AP associated with the first STA. The first radio frame further includes an address 1 (Address 1, A1) field, an address 2 (Address 2, A2) field, and an address 3 (Address 3, A3) field. A value of the A1 field is address information of the first AP, a value of the A2 field is the address information of the first STA, and a value of the A3 field is the responder address information.

In a possible implementation, the first radio frame is a TDLS data frame; and that the first STA sends the first radio frame includes: The first STA sends the first radio frame to the second STA. The first radio frame further includes an A1 field, an A2 field, and an A3 field. A value of the A1 field is the responder address information, a value of the A2 field is the address information of the first STA, and a value of the A3 field is a BSSID or a MAC address of an AP MLD.

In a possible implementation, the second radio frame is a TDLS setup response frame; and that the first STA receives a second radio frame includes: The first STA receives the second radio frame from the first AP associated with the first STA. The second radio frame includes an A1 field, an A2 field, and an A3 field. A value of the A1 field is the address information of the first STA, a value of the A2 field is address information of the first AP, and a value of the A3 field is the responder address information.

In a possible implementation, the second radio frame includes a TDLS discovery response frame, a response frame of the TDLS setup confirm frame, or a response frame of the TDLS data frame; and that the first STA receives a second radio frame includes: The first STA receives the second radio frame from the second STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

In a possible implementation, the first radio frame includes a TDLS discovery request frame, a TDLS setup request frame, or a TDLS setup confirm frame; and that the second STA receives the first radio frame includes: The second STA receives the first radio frame from a second AP associated with the second STA. The first radio frame further includes an A1 field, an A2 field, and an A3 field. A value of the A1 field is the address information of the second STA, a value of the A2 field is address information of the second AP, and a value of the A3 field is the initiator address information.

In a possible implementation, the first radio frame is a TDLS data frame; and that the second STA receives the first radio frame includes: The second STA receives the first radio frame from the first STA. The first radio frame further includes an A1 field, an A2 field, and an A3 field. A value of the A1 field is the address information of the second STA, a value of the A2 field is the initiator address information, and a value of the A3 field is a BSSID or MAC address information of an AP MLD.

In a possible implementation, the second radio frame is a TDLS setup response frame, and that the second STA sends the second radio frame includes: The first STA sends the second radio frame to a second AP associated with the second STA. The second radio frame includes an A1 field, an A2 field, and an A3 field. A value of the A1 field is address information of the second AP, a value of the A2 field is the address information of the second STA, and a value of the A3 field is the initiator address information.

In a possible implementation, the second radio frame includes a TDLS discovery response frame, a response frame of the TDLS setup confirm frame, or a response frame of the TDLS data frame; and that the second STA sends the second radio frame includes: The second STA sends the second radio frame to the first STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

In a possible implementation, the responder is the second STA or the second MLD in which the second STA is located.

In a possible implementation, the initiator is the first STA or the first MLD in which the first STA is located.

In another implementation, the communication apparatus 1000 may be specifically a first STA or a second STA in the communication method (any possible implementation of the communication method) in FIG. 6a.

When the communication apparatus 1000 is configured to execute the communication process related to the first STA (or an initiator), the sending unit 1001 and the receiving unit 1002 are specifically configured to execute the following process.

The sending unit 1001 is configured to send a first radio frame. The first radio frame includes a first information element and a first multi-link element, and the first information element includes MAC address information of the first station STA.

The receiving unit 1002 is configured to receive a second radio frame. The second radio frame is a response frame of the first radio frame.

Based on the technical solution, in a transmission process that is of WLAN communication and that is applied to the TDLS, the first radio frame sent by the sending unit 1001 carries a multi-link element indicating station information of a first MLD in which the first STA is located, and the first information element different from the first multi-link element includes the MAC address information of the first STA. A receiver (for example, a second STA) of the first radio frame may obtain the MAC address information of the first STA based on the first information element. Therefore, the receiver of the first radio frame may receive the MAC address information of the first STA from a location at which the first information element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and the TDLS, to improve communication efficiency.

When the communication apparatus 1000 is configured to execute the communication process related to the second STA (or a responder), the sending unit 1001 and the receiving unit 1002 are specifically configured to execute the following process.

The receiving unit 1002 is configured to receive a first radio frame. The first radio frame includes a first information element and a first multi-link element, and the first information element includes MAC address information of the first station STA.

The sending unit 1001 is configured to send a second radio frame. The second radio frame is a response frame of the first radio frame.

Based on the technical solution, in a transmission process that is of WLAN communication and that is applied to the TDLS, the first radio frame received by the receiving unit 1002 carries a multi-link element indicating station information of a first MLD in which the first STA is located, and the first information element different from the first multi-link element includes the MAC address information of the first STA. A receiver (for example, a second STA) of the first radio frame may obtain the MAC address information of the first STA based on the first information element. Therefore, the receiver of the first radio frame may receive the MAC address information of the first STA from a location at which the first information element in the first radio frame is located, so that the receiver of the first radio frame can effectively learn of the MAC address information of the first STA.

In addition, in some implementations, after the receiver of the first radio frame learns of the MAC address information of the first STA, subsequently, the receiver of the first radio frame may further communicate with the first STA based on the MAC address information of the first STA and the TDLS, to improve communication efficiency.

When the communication apparatus 1000 is configured to execute the communication process related to the first STA (or the second STA, or the initiator, or the responder), the communication apparatus 1000 may further perform the following possible implementations.

In a possible implementation, the first information element is a link identification information element, the link identification information element includes initiator address information and responder address information, the initiator address information is the MAC address information of the first STA (or expressed as that the MAC address information of the first STA is located in the link identification information element), and the responder address information is address information of the second STA or address information of an MLD in which the second STA is located.

In a possible implementation, the first radio frame further includes a link identification information element, the link identification information element includes initiator address information and responder address information, the initiator address information is MAC address information of the first MLD in which the first STA is located, and the responder address information is address information of a second STA or address information of an MLD in which the second STA is located.

Optionally, the first information element is different from the multi-link element, and the first information element is different from the link identification information element.

In a possible implementation, the second radio frame includes a second information element and a second multi-link element, and the second information element includes the MAC address information of the second station STA.

In a possible implementation, the second information element is a link identification information element, the link identification information element includes initiator address information and responder address information, the initiator address information is the MAC address information of the second STA (or expressed as that the MAC address information of the second STA is located in the link identification information element), and the responder address information is address information of the second STA or address information of an MLD in which the second STA is located.

In a possible implementation, the first radio frame further includes a link identification information element, the link identification information element includes initiator address information and responder address information, the initiator address information is MAC address information of the first MLD in which the first STA is located, and the responder address information is address information of a second STA or address information of an MLD in which the second STA is located.

Optionally, the second information element is different from the multi-link element, and the first information element is different from the link identification information element.

In a possible implementation, the first radio frame includes a TDLS discovery request frame, a TDLS setup request frame, or a TDLS setup confirm frame; and that the first STA sends the first radio frame includes: The first STA sends the first radio frame to a first access point AP associated with the first STA. The first radio frame further includes an address 1 (Address 1, A1) field, an address 2 (Address 2, A2) field, and an address 3 (Address 3, A3) field. A value of the A1 field is address information of the first AP, a value of the A2 field is the address information of the first STA, and a value of the A3 field is the responder address information.

In a possible implementation, the first radio frame is a TDLS data frame; and that the first STA sends the first radio frame includes: The first STA sends the first radio frame to the second STA. The first radio frame further includes an A1 field, an A2 field, and an A3 field. A value of the A1 field is the responder address information, a value of the A2 field is the address information of the first STA, and a value of the A3 field is a BSSID or a MAC address of an AP MLD.

In a possible implementation, the second radio frame is a TDLS setup response frame; and that the first STA receives a second radio frame includes: The first STA receives the second radio frame from the first AP associated with the first STA. The second radio frame includes an A1 field, an A2 field, and an A3 field. A value of the A1 field is the address information of the first STA, a value of the A2 field is address information of the first AP, and a value of the A3 field is the responder address information.

In a possible implementation, the second radio frame includes a TDLS discovery response frame, a response frame of the TDLS setup confirm frame, or a response frame of the TDLS data frame; and that the first STA receives a second radio frame includes: The first STA receives the second radio frame from the second STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

In a possible implementation, the first radio frame includes a TDLS discovery request frame, a TDLS setup request frame, or a TDLS setup confirm frame; and that the second STA receives the first radio frame includes: The second STA receives the first radio frame from a second AP associated with the second STA. The first radio frame further includes an A1 field, an A2 field, and an A3 field. A value of the A1 field is the address information of the second STA, a value of the A2 field is address information of the second AP, and a value of the A3 field is the initiator address information.

In a possible implementation, the first radio frame is a TDLS data frame; and that the second STA receives the first radio frame includes: The second STA receives the first radio frame from the first STA. The first radio frame further includes an A1 field, an A2 field, and an A3 field. A value of the A1 field is the address information of the second STA, a value of the A2 field is the initiator address information, and a value of the A3 field is a BSSID or MAC address information of an AP MLD.

In a possible implementation, the second radio frame is a TDLS setup response frame, and that the second STA sends the second radio frame includes: The first STA sends the second radio frame to a second AP associated with the second STA. The second radio frame includes an A1 field, an A2 field, and an A3 field. A value of the A1 field is address information of the second AP, a value of the A2 field is the address information of the second STA, and a value of the A3 field is the initiator address information.

In a possible implementation, the second radio frame includes a TDLS discovery response frame, a response frame of the TDLS setup confirm frame, or a response frame of the TDLS data frame; and that the second STA sends the second radio frame includes: The second STA sends the second radio frame to the first STA. The second radio frame includes an A1 field, an A2 field, and an A3 field. A value of the A1 field is the initiator address information, a value of the A2 field is the address information of the second STA, and a value of the A3 field is a BSSID or MAC address information of an AP MLD.

In a possible implementation, the responder is the second STA or the second MLD in which the second STA is located.

In a possible implementation, the initiator is the first STA or the first MLD in which the first STA is located.

It should be noted that the communication apparatus 1000 may be further configured to perform the foregoing other embodiments and achieve corresponding beneficial effects. For details, refer to the descriptions in the foregoing embodiments. Details are not described herein again.

For ease of description, FIG. 11 is a schematic diagram of a structure of a communication apparatus 1100 according to an embodiment of this application. The communication apparatus 1100 may be an AP (for example, a transmitter or a receiver in the method embodiments) or a STA (for example, a transmitter, a receiver, a first STA, a second STA, an initiator, or a responder in the method embodiments), or a chip in the AP or the STA. FIG. 11 shows only main components of the communication apparatus 1100. The communication apparatus 1100 includes at least a transceiver 1102.

Optionally, the transceiver 1102 may also be referred to as an input/output port, a communication port, a communication interface, or the like.

Optionally, the communication apparatus 1100 further includes a processor 1101. In addition, the communication apparatus 1100 may further include a memory 1103.

Optionally, a bus 1104 may be further added to the apparatus 1100. The bus 1104 is configured to establish a connection between the transceiver 1102 and/or the memory 1103 and the processor 1101.

The processor 1101 is mainly configured to: process a communication protocol and communication data, control an entire communication apparatus, execute a software program, and process data of the software program. The memory 1103 is mainly configured to store the software program and data. The transceiver 1102 may include a control circuit and an antenna. The control circuit is mainly configured to: perform a conversion between a baseband signal and a radio frequency signal, and process the radio frequency signal. The antenna is mainly configured to receive and send a radio frequency signal in a form of an electromagnetic wave. For example, the transceiver 1102 may be a touchscreen, a display, a keyboard, or the like, and is mainly configured to: receive data entered by a user, and output data to the user.

After the communication apparatus 1100 is powered on, the processor 1101 may read the software program in the memory 1103, interpret and execute instructions of the software program, and process data of the software program. When data needs to be transmitted in a wireless manner, the processor 1101 performs baseband processing on the to-be-transmitted data, and then outputs a baseband signal to a radio frequency circuit, and the radio frequency circuit performs radio frequency processing on the baseband signal, and then transmits a radio frequency signal to an outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1101. The processor 1101 converts the baseband signal into data, and processes the data.

Optionally, the memory 1103 may be located inside the processor 1101.

In any one of the foregoing designs, the processor 1101 may include a communication interface for implementing receiving and sending functions. For example, the communication interface may be a transceiver circuit, an interface, or an interface circuit. The transceiver circuit, the interface, or the interface circuit configured to implement the receiving function and the sending function may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1101 may store instructions. The instructions may be a computer program. The computer program is run on the processor 1101, so that the communication apparatus 1100 can perform the method described in the method embodiments. The computer program may be built into the processor 1101. In this case, the processor 1101 may be implemented by hardware.

In an implementation, the communication apparatus 1100 may include a circuit, and the circuit may implement a sending, receiving, or communication function in any one of the method embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may be manufactured by using various IC technologies, for example, a complementary metal oxide semiconductor (complementary metal oxide semiconductor, CMOS), an N-type metal oxide semiconductor (N-type metal oxide semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by that in FIG. 11. The communication apparatus may be an independent device or may be part of a large device. For example, the communication apparatus may be:

(1) an independent integrated circuit IC, a chip, or a chip system or subsystem;
(2) a set including one or more ICs, where optionally, the set of ICs may also include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device, or the like.

In a possible product form, the AP and the STA in the embodiments of this application may be implemented by using a general purpose processor.

It should be understood that the communication apparatuses in the foregoing various product forms have any function of the AP or STA in any one of the foregoing embodiments. Details are not described herein again.

An embodiment of this application further provides a computer-readable storage medium. The computer-readable storage medium stores computer program code. When a processor executes the computer program code, an electronic device performs the method in any one of the foregoing embodiments.

An embodiment of this application further provides a computer program product. When the computer program product is run on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the receive circuit, so that the apparatus performs the method in any one of the foregoing embodiments.

An embodiment of this application further provides a wireless communication system, including at least two STAs (and a possible AP). The at least two STAs (and the possible AP) may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write the information into the storage medium. Certainly, the storage medium may be a component of the processor. The processor and the storage medium may be disposed in an ASIC.

A person of skill in the art should be aware that in one or more of the foregoing examples, the functions described in this application may be implemented by using hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any available medium accessible to a common or a dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

**Claims**

1. A radio frame sending method, comprising:

    generating a first radio frame, wherein the first radio frame comprises a multi-link element, the multi-link element comprises a first field, and the first field indicates whether the multi-link element comprises medium access control MAC address information of a first station STA; and
    sending the first radio frame.

2. A radio frame receiving method, comprising:

    receiving a first radio frame, wherein the first radio frame comprises a multi-link element, the multi-link element comprises a first field, and the first field indicates whether the multi-link element comprises MAC address information of a first station STA; and
    determining, based on the first field, whether to receive the MAC address information of the first STA in the multi-link element.

3. The method according to claim 1 or 2, wherein the first field is located in a presence bitmap field in the multi-link element.

4. The method according to any one of claims 1 to 3, wherein
    when a value of the first field is a first value, the first field indicates that the multi-link element comprises the MAC address information of the first STA.

5. The method according to claim 4, wherein the multi-link element comprises a common information field, and the MAC address information of the first STA is located in the common information field.

6. The method according to any one of claims 1 to 5, wherein
    when the value of the first field is a second value, the first field indicates that the multi-link element does not comprise the MAC address information of the first STA, and the MAC address information of the first STA is located at another location in the first radio frame other than the multi-link element.

7. A communication method, comprising:

    sending a first radio frame, wherein the first radio frame comprises a first multi-link element corresponding to a first multi-link device MLD in which a first station STA is located, and the first multi-link element comprises medium access control MAC address information of the first STA; and
    receiving, by the first STA, a second radio frame, wherein the second radio frame is a response frame of the first radio frame.

8. A communication method, comprising:

    receiving, by a second station STA, a first radio frame, wherein the first radio frame comprises a first multi-link element corresponding to a first multi-link device MLD in which a first STA is located, and the first multi-link element comprises medium access control MAC address information of the first STA; and
    sending, by the second STA, a second radio frame, wherein the second radio frame is a response frame of the first radio frame.

9. The method according to claim 7 or 8, wherein the first multi-link element comprises a common information field, and the MAC address information of the first STA is located in the common information field.

10. The method according to any one of claims 7 to 9, wherein the first multi-link element comprises a first field, and the first field indicates whether the first multi-link element comprises the MAC address information of the first STA.

11. The method according to claim 10, wherein the first field is located in a presence bitmap field in the first multi-link element.

12. The method according to any one of claims 7 to 11, wherein the first radio frame further comprises a first information element, the first information element comprises initiator address information and responder address information, and the initiator address information is a MAC address of the first MLD in which the first STA is located.

13. The method according to claim 12, wherein
in the first radio frame, the responder address information is MAC address information of the second STA or MAC address information of a second MLD in which the second STA is located.

14. The method according to any one of claims 7 to 13, wherein the second radio frame comprises a second multi-link element corresponding to the second MLD in which the second STA is located, and the second multi-link element comprises the MAC address of the second STA.

15. The method according to claim 14, wherein the second multi-link element comprises a common information field, and the MAC address information of the second STA is located in the common information field.

16. The method according to claim 14 or 15, wherein the second multi-link element comprises a second field, and the second field indicates whether the second multi-link element comprises the MAC address information of the second STA.

17. The method according to claim 16, wherein the second field is located in a presence bitmap field in the second multi-link element.

18. The method according to any one of claims 7 to 17, wherein
the second radio frame further comprises a second information element, and the second information element comprises initiator address information and responder address information.

19. The method according to claim 18, wherein
in the second information element, the initiator address information is any one of the following:

the MAC address of the first STA; or
the MAC address of the first MLD in which the first STA is located; or
a MAC address of a third STA, wherein both the third STA and the first STA are located in the first MLD, and a BSSID of a BSS in which the second STA is located is the same as a BSSID of a BSS in which the third STA is located.

20. The method according to claim 18 or 19, wherein
in the second information element, the address information of the responder is any one of the following:

the MAC address of the second STA; or
the MAC address of the second MLD in which the second STA is located.

21. The method according to any one of claims 7 and 9 to 20, wherein the first radio frame comprises a TDLS discovery request frame, a TDLS setup request frame, or a TDLS setup confirm frame; and
the sending the first radio frame comprises:
sending the first radio frame to a first access point AP associated with the first STA, wherein the first radio frame further comprises an address 1 A1 field, an address 2 A2 field, and an address 3 A3 field, a value of the A1 field is address information of the first AP, a value of the A2 field is the address information of the first STA, and a value of the A3 field is the responder address information.

22. The method according to any one of claims 7 and 9 to 20, wherein the first radio frame is a TDLS data frame; and
the sending the first radio frame comprises:
sending the first radio frame to the second STA, wherein the first radio frame further comprises an A1 field, an A2 field, and an A3 field, a value of the A1 field is the responder address information, a value of the A2 field is the address information of the first STA, and a value of the A3 field is a BSSID or MAC address of an AP MLD.

23. The method according to any one of claims 7 and 9 to 22, wherein the second radio frame is a TDLS setup response frame; and
the receiving the second radio frame comprises:
receiving the second radio frame from the first AP associated with the first STA, wherein the second radio frame comprises an A1 field, an A2 field, and an A3 field, a value of the A1 field is the address information of the first STA, a value of the A2 field is the address information of the first AP, and a value of the A3 field is the responder address information.

24. The method according to any one of claims 7 and 9 to 22, wherein the second radio frame comprises a TDLS discovery response frame, a response frame of the TDLS setup confirm frame, or a response frame of the TDLS data frame; and
   the receiving the second radio frame comprises:
   receiving the second radio frame from the second STA, wherein the second radio frame comprises an A1 field, an A2 field, and an A3 field, a value of the A1 field is the initiator address information, a value of the A2 field is the address information of the second STA, and a value of the A3 field is a BSSID or MAC address information of an AP MLD.

25. The method according to any one of claims 8 to 23, wherein the first radio frame comprises the TDLS discovery request frame, the TDLS setup request frame, or the TDLS setup confirm frame; and
   the receiving the first radio frame comprises:
   receiving the first radio frame from a second AP associated with the second STA, wherein the first radio frame further comprises an A1 field, an A2 field, and an A3 field, a value of the A1 field is address information of the second STA, a value of the A2 field is address information of the second AP, and a value of the A3 field is the initiator address information.

26. The method according to any one of claims 8 to 23, wherein the first radio frame is a TDLS data frame; and
   the receiving the first radio frame comprises:
   receiving the first radio frame from the first STA, wherein the first radio frame further comprises an A1 field, an A2 field, and an A3 field, a value of the A1 field is address information of the second STA, a value of the A2 field is the initiator address information, and a value of the A3 field is a BSSID or MAC address information of an AP MLD.

27. The method according to any one of claims 8 to 23, wherein the second radio frame is a TDLS setup response frame; and
   the sending the second radio frame comprises:
   sending the second radio frame to a second AP associated with the second STA, wherein the second radio frame comprises an A1 field, an A2 field, and an A3 field, a value of the A1 field is address information of the second AP, a value of the A2 field is address information of the second STA, and a value of the A3 field is the initiator address information.

28. The method according to any one of claims 8 to 23, wherein the second radio frame comprises a TDLS discovery response frame, a response frame of the TDLS setup confirm frame, or a response frame of the TDLS data frame; and
   the sending the second radio frame comprises:
   sending the second radio frame to the first STA, wherein the second radio frame comprises an A1 field, an A2 field, and an A3 field, a value of the A1 field is the initiator address information, a value of the A2 field is address information of the second STA, and a value of the A3 field is a BSSID or MAC address information of an AP MLD.

29. The method according to any one of claims 21 to 23, wherein
   the responder is the second STA or the second MLD in which the second STA is located.

30. The method according to any one of claims 24 to 28, wherein
   the initiator is the first STA or the first MLD in which the first STA is located.

31. A radio frame sending apparatus, wherein the apparatus comprises a receiving unit and a sending unit, and the apparatus is configured to perform the method according to any one of claims 1 and 3 to 6.

32. A radio frame receiving apparatus, wherein the apparatus comprises a receiving unit and a sending unit, and the apparatus is configured to perform the method according to any one of claims 2 to 6.

33. A communication apparatus, wherein the apparatus comprises a receiving unit and a sending unit, and the apparatus is configured to perform the method according to any one of claims 7 and 9 to 30.

34. A communication apparatus, wherein the apparatus comprises a receiving unit and a sending unit, and the apparatus is configured to perform the method according to any one of claims 8 to 30.

35. A communication apparatus, comprising at least one processor, coupled to a memory, wherein

the memory is configured to store a program or instructions; and
the at least one processor is configured to execute the program or the instructions, so that the apparatus implements the method according to any one of claims 1 to 30.

36. A computer program product comprising program instructions, wherein when the program instructions are run on a computer, the computer is enabled to perform the method according to any one of claims 1 to 30.

37. A computer-readable storage medium, wherein the computer-readable storage medium stores program instructions, and when the program instructions are run, the method according to any one of claims 1 to 30 is performed.

**Multi-link access point device**

Link 1        Link 2                Link n

AP 1        AP 2     ...     AP n

Associated      Associated      Associated

STA 1       STA 2     ...     STA n

Link 1        Link 2              Link n

**Multi-link station device**

FIG. 1

|  | Element identifier | Length | Basic service set identifier | TDLS initiator station address | TDLS responder station address |
|---|---|---|---|---|---|
|  | Element ID | Length | BSSID | TDLS initiator STA address | TDLS responder STA address |
| Quantity of octets (Octets): | 1 | 1 | 6 | 6 | 6 |

FIG. 2a

| Frame control | Duration | Address 1 | Address 2 | Address 3 | Sequence control | Address 4 | Quality of service control | High throughput control | Frame body | Frame check sequence |
|---|---|---|---|---|---|---|---|---|---|---|
| Frame control | Duration | Address 1 | Address 2 | Address 3 | Sequence control | Address 4 | QoS control | HT control | Frame body | FCS |

FIG. 2b

| Element identifier | Length | Version | Group data cipher suite | Pairwise cipher suite count | Pairwise cipher suite list |
|---|---|---|---|---|---|
| Element ID | Length | Vision | Group data cipher suite | Pairwise cipher suite count | Pairwise cipher suite list |

| | Element ID | Length | Vision | Group data cipher suite | Pairwise cipher suite count | Pairwise cipher suite list |
|---|---|---|---|---|---|---|
| Quantity of octets: (Octets) | 1 | 1 | 2 | 0 or 4 | 0 or 2 | 0 or (4 * m) |

| Authentication and key management suite count | Authentication and key management suite list | Robust security network element capability information | Pairwise master key identifier count | Pairwise master key identifier list | Group management cipher suite |
|---|---|---|---|---|---|
| AKM suite count | AKM suite list | RSN capabilities | PMKID count | PMKID list | Group management cipher suite |

| | AKM suite count | AKM suite list | RSN capabilities | PMKID count | PMKID list | Group management cipher suite |
|---|---|---|---|---|---|---|
| Quantity of octets: (Octets) | 0 or 2 | 0 or (4 * n) | 0 or 2 | 0 or 2 | 0 or (16 * s) | 0 or 4 |

FIG. 3a

| Element identifier | Length | Message integrity code control | Message integrity code | Authenticator nonce | Supplicant nonce | Optional parameter |
|---|---|---|---|---|---|---|
| Element ID | Length | MIC control | MIC | ANonce | SNonce | Optional parameter(s) |

Quantity of octets:
(Octets)

| 1 | 1 | 2 | variable | 32 | 32 | variable |
|---|---|---|---|---|---|---|

FIG. 3b

EP 4 387 377 A1

300

310
MLD common information part

320
Optional sub-element

| 301 | 302 | 303 | 304 | 305 | | | 306 | 307 | 308 |
|---|---|---|---|---|---|---|---|---|---|
| Element ID | Length | Element ID extension | Multi-link control | Length | MLD MAC address | ... | Field k | Per-STA profile x | Per-STA profile y (if present) |

| 314 | 324 | 334 |
|---|---|---|
| Type | Field k present | Reserved |

| 317 | 327 | 337 |
|---|---|---|
| Subelement ID | Length | Content |

| 3371 | 3372 | 3373 |
|---|---|---|
| STA control | STA information | STA profile |

| 33711 | 33712 |
|---|---|
| Link ID | STA MAC address present |

| 33721 | 33722 | 33723 |
|---|---|---|
| Length | STA MAC address | ... |

| 33731 | 33732 | | 33733 |
|---|---|---|---|
| Field x | Element Y | ... | Non-inheritance element (if present) |

Last element

FIG. 4

Transmitter

Receiver

S101: Generate a first radio frame

S102: First radio frame →

S103: Determine, based on a first field, whether to receive MAC address information of a first STA in a multi-link element

FIG. 5a

| Frame control | Duration | Address 1 | Address 2 | Address 3 | Sequence control | Address 4 | Quality of service control | High throughput control | Frame body | Frame check sequence |
|---|---|---|---|---|---|---|---|---|---|---|
| Frame control | Duration | Address 1 | Address 2 | Address 3 | Sequence control | Address 4 | QoS control | HT control | Frame body | FCS |

| Category | TDLS action | Dialog token | Link identifier | Multi-link element |
|---|---|---|---|---|

| Category | TDLS action | Dialog token | Link identification information element | Multi-link element |
|---|---|---|---|---|

FIG. 5b

First STA

Second STA

S201: First radio frame

S202: Second radio frame

FIG. 6a

Initiator

Responder

S301: TDLS discovery request frame

S302: TDLS discovery response frame

S303: TDLS setup request frame

S304: TDLS setup response frame

S305: TDLS confirm frame

S306: First acknowledgment frame

S307: TDLS data frame

S308: Second acknowledgment frame

FIG. 6b

FIG. 7a

Same multiple BSSID set 1

AP MLD 1

AP 11　　　　　　　　AP 12　　　　　　　　AP 31

Non-AP MLD 1

STA 11　　　　　　　STA 12　　　　　　STA 31

FIG. 7b

AP MLD

AP 11　　　　　　　AP 12

Non-AP MLD 1　　　　　　　　Non-AP MLD 2

STA 11　　　　　　STA 12　　　　STA 41　　　　　　STA 42

FIG. 7c

Same multiple BSSID set 2

Same multiple BSSID set 1

AP MLD 1

AP 11          AP 12

Non-AP MLD 1

STA 11          STA 12

AP MLD 2

AP 51          AP 52

Non-AP MLD 2

STA 51          STA 52

FIG. 7d

| Element identifier | Length | Element identifier extension | Multi-link control | Common information | Link information |
|---|---|---|---|---|---|
| Element ID | Length | Element ID extension | Multi-link control | Common info | Link info |

| ... | Reporting STA address | ... |
|---|---|---|

Reporting station address information

FIG. 8a

| Element ID | Length | Element ID extension | Multi-link control | Common information | Link information |
|---|---|---|---|---|---|
| Element ID | Length | Element ID extension | Multi-link control | Common info | Link info |

| | Presence bitmap | |
|---|---|---|
| ... | Presence bitmap | |
| | Reporting station MAC address present | |
| ... | Reporting STA MAC address present | |

**FIG. 8b**

| Frame control | Duration | Address 1 | Address 2 | Address 3 | Sequence control | High throughput control | Frame body | Frame check sequence |
|---|---|---|---|---|---|---|---|---|
| Frame control | Duration | Address 1 | Address 2 | Address 3 | Sequence control | HT control | Frame body | FCS |

**FIG. 8c**

900

Communication apparatus

901

Processing unit

902

Transceiver unit

**FIG. 9**

1000

Communication apparatus

1001

Sending unit

1002

Receiving unit

FIG. 10

1100

Communication apparatus

1102

Input/Output port

1101

Processor

1104

1103

Memory

FIG. 11

<table>
<tr><td colspan="2" align="center">**INTERNATIONAL SEARCH REPORT**</td><td>International application No.<br>**PCT/CN2022/117024**</td></tr>
</table>

**A. CLASSIFICATION OF SUBJECT MATTER**

H04W 76/11(2018.01)i

According to International Patent Classification (IPC) or to both national classification and IPC

**B. FIELDS SEARCHED**

Minimum documentation searched (classification system followed by classification symbols)

H04W 76/-;H04L 1/-;H04W 48/-

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 百度学术, BAIDU SCHOLAR: 多链路元素, 多连接信息元素, 多连接元素, 媒体接入控制, 媒体访问控制, 介质访问控制, 介质接入控制, 媒介接入控制, 媒介访问控制, 地址, 指示; VEN; WOTXT; USTXT; EPTXT; IEEE; 3GPP: multilink element, ML element, MAC, Address, BSSID, indicat+

**C. DOCUMENTS CONSIDERED TO BE RELEVANT**

| Category* | Citation of document, with indication, where appropriate, of the relevant passages | Relevant to claim No. |
|---|---|---|
| PX | WO 2022149814 A1 (LG ELECTRONICS INC.) 14 July 2022 (2022-07-14)<br>description, paragraphs [0085]-[0275] | 1-37 |
| X | WO 2021112510 A1 (LG ELECTRONICS INC.) 10 June 2021 (2021-06-10)<br>description, paragraphs [0346]-[0412] | 7-9, 33-37 |
| Y | WO 2021112510 A1 (LG ELECTRONICS INC.) 10 June 2021 (2021-06-10)<br>description, paragraphs [0346]-[0412] | 1-6, 10-32 |
| Y | CN 111066271 A (QUALCOMM INC.) 24 April 2020 (2020-04-24)<br>description, paragraphs [0064]-[0093] | 1-6, 10-32 |
| A | WO 2021011476 A1 (INTERDIGITAL PATENT HOLDINGS, INC.) 21 January 2021<br>(2021-01-21)<br>entire document | 1-37 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 November 2022** | **07 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/117024**

| Patent document cited in search report | | | Publication date (day/month/year) | Patent family member(s) | | | Publication date (day/month/year) |
|---|---|---|---|---|---|---|---|
| WO | 2022149814 | A1 | 14 July 2022 | None | | | |
| WO | 2021112510 | A1 | 10 June 2021 | KR | 20220113732 | A | 16 August 2022 |
| | | | | EP | 4072236 | A1 | 12 October 2022 |
| | | | | CN | 115024016 | A | 06 September 2022 |
| CN | 111066271 | A | 24 April 2020 | TW | 201921986 | A | 01 June 2019 |
| | | | | US | 2019082373 | A1 | 14 March 2019 |
| | | | | WO | 2019050704 | A1 | 14 March 2019 |
| | | | | CN | 111066271 | B | 29 July 2022 |
| | | | | TW | 758532 | B1 | 21 March 2022 |
| | | | | US | 10959153 | B2 | 23 March 2021 |
| | | | | IN | 202047005275 | A | 28 February 2020 |
| WO | 2021011476 | A1 | 21 January 2021 | AU | 2020315323 | A1 | 10 February 2022 |
| | | | | CN | 114208295 | A | 18 March 2022 |
| | | | | US | 2022287122 | A1 | 08 September 2022 |
| | | | | JP | 2022543188 | A | 11 October 2022 |
| | | | | BR | 112022000577 | A2 | 15 March 2022 |
| | | | | EP | 3997899 | A1 | 18 May 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111045946